# EUROPÄISCHE PATENTSCHRIFT

(11) **EP 0 981 173 B1**
(45) Veröffentlichungstag und Bekanntmachung des Hinweises auf die Patenterteilung: **26.05.2004**
(21) Anmeldenummer: 98121497.6
(22) Anmeldetag: 12.11.1998
(51) Int. Cl.: H01M 2/34, H01M 2/10, H04R 25/00

(54) **Schutzvorrichtung für eine mehrfach nachladbare elektrochemische Batterie**
Protection device for a rechargeable electrochemical battery
Dispositif de protection pour une batterie electrochimique rechargeable

(30) Priorität: 20.08.1998 DE 19837909
(43) Veröffentlichungstag der Anmeldung: 23.02.2000
(73) Patentinhaber: Cochlear Limited, Lane Cove, NSW 2066 (AU)
(72) Erfinder: Volz, Andreas Dipl.-Ing., 81929 München (DE); Baumann, Joachim Dipl.-Ing., 81679 München (DE); Bodganowitz, Klaus, 80339 München (DE); Leysieffer, Hans Dr.-Ing., 82024 Taufkirchen (DE); Müller, Dieter Dr., 86405 Meitingen (DE); Müller, Gerd Dr. Dipl.-Phys., 85716 Lohhof (DE)
(74) Vertreter: Schwan, Gerhard, Dipl.-Ing.

(56) Entgegenhaltungen:
- WO-A-94/10712
- DE-A- 2 719 301
- DE-A- 4 127 526
- US-A- 2 651 669
- US-A- 3 933 526
- US-A- 3 957 056
- US-A- 4 275 739
- PATENT ABSTRACTS OF JAPAN vol. 005, no. 070 (E-056), 12. Mai 1981 (1981-05-12) -& JP 56 019872 A (JAPAN STORAGE BATTERY CO LTD), 24. Februar 1981 (1981-02-24)
- PATENT ABSTRACTS OF JAPAN vol. 1996, no. 04, 30. April 1996 (1996-04-30) -& JP 07 335274 A (ALPS ELECTRIC CO LTD), 22. Dezember 1995 (1995-12-22)
- PATENT ABSTRACTS OF JAPAN vol. 007, no. 115 (E-176), 19. Mai 1983 (1983-05-19) & JP 58 034577 A (TOKYO SHIBAURA DENKI KK), 1. März 1983 (1983-03-01)

## Beschreibung

Die Erfindung betrifft eine Schutzvorrichtung für eine mehrfach nachladbare elektrochemische Batterie mit einem Batteriegehäuse, wobei die Schutzvorrichtung mindestens ein von einem Detektororgan betätigbares Schaltorgan aufweist, welches ausgelegt oder einstellbar ist, bei einem unzulässigen Betriebszustand der Batterie ein Nachladen und/oder Entladen derselben zu verhindern.

Bei elektrochemischen Batterien kann es beispielsweise bei übermäßigem Laden oder einem Kurzschluß zwischen den Anschlußkontakten des Batteriegehäuses zu einem Druckanstieg im Inneren des Batteriegehäuses kommen, der zu einer Verformung des Batteriegehäuses führt, die so groß werden kann, daß Chemikalien insbesondere in gasförmiger Form austreten.

Aus der EP-A-0 322 112, EP-A-0 360 395 und der EP-A-0 370 634 ist es bekannt, elektrochemische Batterien mit einem Schaltorgan zu versehen, das bei Überschreiten einer bestimmten noch tolerierten Grenzverformung des Batteriegehäuses einen elektrischen Anschlußkontakt von einer zugehörigen elektrochemisch aktiven Elektrode vorzugsweise irreversibel trennt, um eine weitere Verformung des Batteriegehäuses zu verhindern. Das Batteriegehäuse umfaßt einen elektrisch leitfähigen stirnseitig geschlossenen zylindrischen Gehäuseabschnitt, der mit einer Elektrode kontaktiert ist, wobei an der Stirnseite das tellerförmige Schaltorgan zentrisch mittels eines elektrisch isolierenden Klebstoffes von außen angebracht ist. Das elektrisch ebenfalls leitfähige Schaltorgan bildet in seiner Grundstellung über seinen Außenrand eine elektrische Verbindung zwischen dem Gehäuseabschnitt und dem im Zentrum des Schaltorgans angeordneten nach außen vorstehenden elektrischen Anschlußkontakt. Bei Druckzunahme im Inneren des Batteriegehäuses wölbt sich die als Detektororgan wirkende Stirnseite des Gehäuseabschnitts nach außen, wodurch der Kontakt zwischen dem Gehäuseabschnitt und dem Außenrand des Schaltorgans und somit zwischen der einen Elektrode und dem Anschlußkontakt unterbrochen wird. Als typisches Anwendungsgebiet solcher Schaltorgane werden Standardbatterien vom Typ "D" genannt. Die Wölbung der Stirnseite, ab der das Schaltorgan den elektrischen Kontakt unterbricht, beträgt in diesem Fall 0,76 mm bis 1,8 mm. Bei einer Wölbung von mehr als 1,8 mm ist üblicherweise mit dem Austreten von Chemikalien aus dem Inneren des Batteriegehäuses zu rechen.

EP-A-0 470 726 offenbart eine elektrochemische Batterie mit einem zylindrischen Batteriegehäuse und einer Druckmembran als Detektororgan, die stirnseitig im Batteriegehäuse integriert ist und sich bei Druckanstieg im Inneren des Batteriegehäuses wölbt, wodurch ein zentrisch mit der Druckmembran verbundenes tellerförmiges Schaltorgan einen elektrischen Kontakt zwischen einer Elektrode und einem Anschlußkontakt der Batterie reversibel oder irreversibel unterbricht.

Aus der EP-A-0 674 351 ist eine elektrochemische Batterie bekannt, deren Batteriegehäuse eine von einer Druckmembran betätigbare Schnittvorrichtung umfaßt, die bei Überschreitung eines Grenzdrucks im Inneren des Batteriegehäuses einen elektrischen Leiter irreversibel durchtrennt, der einen Anschlußkontakt der Batterie mit einer elektrochemisch aktiven Elektrode verbindet.

Auch bei Einsatz eines Schaltorgans, welches bei Überschreitung eines bestimmten Druckes im Inneren des Batteriegehäuses die elektrische Verbindung zwischen einem Anschlußkontakt und der zugehörigen elektrochemisch aktiven Elektrode unterbricht, ist es möglich, daß der Druck weiter ansteigt und es letztendlich zu einem Austritt von Chemikalien aus dem Batteriegehäuse kommt oder dieses gar explodiert. Aus diesem Grund wurde vorgeschlagen (beispielsweise in der EP-A-0 364 995, der EP-A-0 573 998 oder der EP-A-0 739 047), eine in das Batteriegehäuse integrierte, das Schaltorgan betätigende Druckmembran mit einem Berstbereich zu versehen, über den nach Aktivierung des Schaltorgans und weiterem Druckanstieg Chemikalien aus dem Inneren des Batteriegehäuses austreten können.

Die im oben genannten Stand der Technik aufgeführten Schutzvorrichtungen für elektrochemische Batterien eignen sich nicht für den Einsatz als Teil implantierbarer Vorrichtungen, da hierfür besonders hohe Anforderungen, insbesondere in Bezug auf Sicherheit und Zuverlässigkeit bei gleichzeitig weitestgehender Reduzierung sämtlicher Abmessungen, erfüllt werden müssen. Eine Kontamination umliegenden Gewebes mit toxischen Substanzen sowie eine Gefährdung des Implantatträgers durch eine Fehlfunktion der Batterie ist unter allen Betriebsbedingungen auszuschließen.

Der im Anspruch 1 angegebenen Erfindung liegt die Aufgabe zugrunde, eine Schutzvorrichtung für eine mehrfach nachladbare elektrochemische Batterie zu schaffen, welche die spezifischen Anforderungen an Teile implantierbarer Vorrichtungen erfüllt.

Diese Aufgabe wird bei einer Schutzvorrichtung mit den Merkmalen des Oberbegriffs des Anspruchs 1 erfindungsgemäß dadurch gelöst, daß die Schutzvorrichtung ein hermetisch dichtes Schutzgehäuse umfaßt, welches
- das Batteriegehäuse aufnimmt,
- dem Detektororgan bei unzulässigem Betriebszustand der Batterie eine Formänderung aufgeprägt, und
- Teil einer implantierbaren Vorrichtung ist.

Indem das Schutzgehäuse das Batteriegehäuse hermetisch dicht aufnimmt, werden an das Batteriegehäuse selbst keine besonderen Anforderungen gestellt. Es ist daher möglich, eine herkömmliche Batterie, beispielsweise eine gewöhnliche Knopfzelle, zu verwenden, ohne daß auf Materialwahl oder dergleichen zu achten ist. Aus dem Inneren des Batteriegehäuses austretende Chemikalien werden im hermetisch dichten Schutzgehäuse sicher zurückgehalten, welches explosionssicher ausgestaltet sein kann.

Unter hermetischer Dichtheit wird vorliegend vorzugsweise hermetische Gasdichtheit nach Mil-Std 883 D verstanden. Durch diese Ausführung wird gewährleistet, daß bei Verwendung der nachladbaren Batterie oder des Akkus in einem elektronischen Implantat, das selbst wiederum in einem hermetisch dichten und ferner biokompatiblen Gehäuse untergebracht ist, neben flüssigen toxischen Substanzen auch keine Gase aus dem Schutzgehäuse austreten können. Solche Gase treten grundsätzlich in geringen Mengen auch bei bestimmungsgemäßem Normalbetrieb des Akkus auf. Durch die hermetische Gasdichtheit des Schutzgehäuses wird eine Gefährdung der umliegenden Elektronik sicher verhindert; dies bedeutet, daß die elektronischen Schaltungen, insbesondere integrierte Schaltungen, ungeschützt bleiben können, da eine Kontamination auch durch kleinste Mengen austretender Batteriegase nicht möglich ist.

Da dem Detektororgan bei einem unzulässigen Betriebszustand der Batterie eine Formänderung nicht direkt vom Batteriegehäuse, sondern vom hermetisch dichten Schutzgehäuse aufgeprägt wird, ist es prinzipiell möglich, daß als unzulässiger Betriebszustand auch ein kontinuierliches Austreten von Chemikalien aus dem Batteriegehäuse detektiert wird, welches zu einem Druckanstieg im Schutzgehäuse führt.

Die funktionelle Trennung von Batterie und Batteriegehäuse auf der einen sowie Schutzgehäuse und Detektororgan mit vom Schutzgehäuse aufgeprägter Formänderung auf der anderen Seite erlaubt eine unabhängige Auswahl und Optimierung der jeweiligen Komponenten. Beispielsweise müssen die Anforderungen an die Abmessungstoleranzen des Batteriegehäuses nicht sehr groß sein, da Abweichungen gemessen und am Schutzgehäuse bei dessen Fertigung ausgeglichen werden können.

Bei der implantierbaren Vorrichtung kann es sich unter anderem um ein aktives, elektronisches Hörimplantat, einen Herzschrittmacher, einen Drogenspender, einen Neurostimulator oder dergleichen handeln.

Vorteilhafte Weiterbildungen der Erfindung sind Gegenstand der Unteransprüche.

Ein Nachladen der Batterie wird vorzugsweise verhindert, indem mindestens ein Schaltorgan als Öffner ausgebildet ist, der ausgelegt oder einstellbar ist, bei einem unzulässigen Betriebszustand der Batterie einen Nachladestromkreis elektrisch zu unterbrechen, welcher mittels einer Ladevorrichtung speisbar ist.

Es kann ferner wenigstens ein Schaltorgan als Öffner ausgebildet sein, der ausgelegt oder einstellbar ist, bei einem unzulässigen Betriebszustand der Batterie den Verbraucherstromkreis elektrisch zu unterbrechen. So ist es möglich, etwa bei einem Kurzschluß im Verbraucherstromkreis zu verhindern, daß eine übermäßig hohe elektrische Leistung der Batterie entzogen wird, was ebenfalls einen unzulässigen Betriebszustand der Batterie, d.h., beispielsweise eine Volumenexpansion der Batterie oder einen zu einem Druckanstieg im Inneren des hermetisch dichten Schutzgehäuses führenden Gasaustritt aus dem Batteriegehäuse, hervorrufen kann. Es ist auch denkbar, daß der Öffner so angeordnet ist, daß er mit dem Verbraucherstromkreis gleichzeitig den Nachladestromkreis unterbricht.

In bevorzugter weiterer Ausgestaltung der Erfindung ist mindestens ein Schaltorgan als Schließer ausgebildet, der ausgelegt oder einstellbar ist, bei einem unzulässigen Betriebszustand der Batterie den mittels einer Ladevorrichtung speisbaren Nachladestromkreis elektrisch kurzzuschließen, wodurch eine weitere Energiezufuhr zur Batterie unterbrochen wird.

Es kann ferner mindestens ein Schaltorgan vorhanden sein, welches als Schließer ausgebildet ist, der ausgelegt oder einstellbar ist, bei einem unzulässigen Betriebszustand der Batterie diese elektrisch kurzzuschließen. Ein solcher Schließer ist insbesondere in serieller Kopplung mit einer Überstromsicherung sinnvoll, die einen Strom in einem Nachlade- und/oder einem Verbraucherstromkreis der Batterie irreversibel unterbrechen kann. Die Überstromsicherung kann als Schmelzsicherung ausgebildet sein, die bei Kurzschluß von der in der Batterie gespeicherten Restenergie durchgebrannt wird. Reicht die Energie hierzu nicht aus, kann die Batterie vollständig entladen werden. Es ist ebenso möglich, daß wenigstens eine Überstromsicherung den Strom im Nachlade- und/oder einem Verbraucherstromkreis lediglich begrenzt, wobei vorteilhaft die Überstromsicherung als Kaltleiter (PTC-Widerstand) ausgebildet ist, dessen Widerstand mit zunehmender Temperatur ansteigt.

Die Schaltorgane können einen Stromkreis, in den sie eingebunden sind, grundsätzlich reversibel oder irreversibel unterbrechen. Reversibel arbeitende Schaltorgane bieten den Vorteil, daß man ihre Funktion zerstörungsfrei beispielsweise im zusammengebauten Zustand im Zusammenwirken mit anderen Komponenten der Schutzvorrichtung prüfen kann.

Die dem Detektororgan vom Schutzgehäuse bei einem unzulässigen Betriebszustand der Batterie aufgeprägte Formänderung betätigt sinnvollerweise mindestens ein Schaltorgan mechanisch. Eine direkte mechanische Betätigung des Schaltorgans durch die Formänderung des Detektororgans ist besonders zuverlässig, da sie zwangsweise arbeitet, ohne auf nichtmechanische Übertragungsglieder angewiesen zu sein.

Dies schließt nicht aus, daß, insbesondere wenn zwei oder mehrere Schaltorgane redundant vorhanden sind, mindestens ein Schaltorgan mittels einer die Formänderung des Detektororgans erfassenden Auswerteelektronik betätigbar ist. Vorteilhaft wird ein elektrischer Dehnungsmesser eingesetzt, der die Formänderung des Detektororgans erfaßt und mit Änderung einer elektrischen Größe, die von der Auswerteelektronik überwacht wird, antwortet. Handelt es sich bei dem elektrischen Dehnungsmesser um ein passives System, kann er die Formänderung des Detektororgans in eine Änderung seines elektrischen Widerstands (Dehnungsmeßstreifen), seiner Induktivität oder seiner Kapazität umwandeln. Alternativ kann ein aktiver elektrischer Dehnungsmesser eingesetzt werden, der, wie z.B. ein Piezoelement, mit einer Ladungsänderung auf eine vom Detektororgan auf den Dehnungsmesser aufgebrachte Formänderung reagiert.

In weiterer Ausgestaltung der Erfindung ist das Detektororgan Teil des Schutzgehäuses und insbesondere als wölbbare Membran ausgebildet, die insbesondere eine Außen- oder Trennwand des hermetisch dichten Schutzgehäuses bildet. Dies erlaubt eine raumsparende Konstruktion und eine gut vorherbestimmbare Formänderung des Detektororgans bei Druckanstieg im Schutzgehäuse.

Insbesondere die für eine implantierbare Vorrichtung besonders kritische Dicke des Schutzgehäuses läßt sich auf ein Minimum reduzieren, wenn mindestens eine Membran in eine Seitenwand des hermetisch dichten Schutzgehäuses integriert ist, wobei die Wölbungsrichtung der Membran im wesentlichen lotrecht zur kleinsten Ausdehnung der Batterie verläuft. Ein in Richtung der kleinsten Ausdehnung der Batterie ober- und unterhalb derselben vorgesehener Deckel bzw. Boden des Schutzgehäuses bleiben dann sinnvollerweise frei von Detektor- und Schaltorganen, so daß die Dicke des Schutzgehäuses diejenige der Batterie nur wenig übersteigt. Eine redundante Absicherung gegen einen unzulässigen Betriebszustand der Batterie ergibt sich, wenn beispielsweise zwei Membranen vorgesehen werden, von denen eine als Teil eines Schließers ausgebildet und mittels dieser Membran bei einem unzulässigen Betriebszustand der Batterie ein Kontaktpaar des Schließers elektrisch kurzschließbar ist. Die zweite Membran kann als Teil eines Öffners ausgebildet sein, wobei mittels dieser zweiten Membran bei einem unzulässigen Betriebszustand der Batterie ein Kontaktpaar des Öffners elektrisch außer Eingriff bringbar ist.

Vorteilhaft für die hermetische dichte Gestaltung des Schutzgehäuses und einen einfachen Aufbau desselben ist es, wenn die Batterie mit beiden auf dem Batteriegehäuse befindlichen Anschlußkontakten mit elektrisch gegeneinander isolierten Bereichen des Schutzgehäuses kontaktiert ist, wobei die elektrisch gegeneinander isolierten Bereiche des Schutzgehäuses elektrisch leitfähig und mit einem Nachlade- und/oder Verbraucherstromkreis elektrisch verbunden sind.

Die Abmessungen des im Schutzgehäuse vorgesehenen, vorzugsweise von einem keramischen Werkstoff gebildeten, isolierenden Bereichs können minimiert werden, wenn wenigstens ein Anschlußkontakt des Batteriegehäuses über eine hermetisch dichte, mit Bezug zum Schutzgehäuse elektrisch isolierte Durchführung mit einem Nachlade- und/oder Verbraucherstromkreis elektrisch verbunden ist.

Die Durchführung kann prinzipiell ein- oder mehrpolig ausgeführt sein, wobei die Anzahl der Pole vorteilhaft derjenigen der Anschlußkontakte bzw. Pole der Batterie entspricht. Mittels der Durchführung ist jedoch nicht nur eine Energie- sondern prinzipiell auch eine Signalübertragung durch eine Wandung des Schutzgehäuses möglich. Die Durchführung umfaßt vorzugsweise ein keramisches Substrat, wobei für jeden durchzuführenden Pol ein metallischer Kontaktstift das Substrat hermetisch dicht durchsetzt.

Die Kontaktstifte sind zweckmäßig in dem keramischen Substrat und dieses in einer Außenwand des Schutzgehäuses hermetisch dicht mittels einer stoffschlüssigen Verbindung, vorzugsweise einer Lötverbindung, insbesondere einer Goldlötverbindung, aufgenommen.

Es kann von Vorteil sein, daß die Kontaktstifte in dem keramischen Substrat und dieses in einer metallischen Aufnahme hermetisch dicht mittels einer stoffschlüssigen Verbindung aufgenommen sind, wobei die metallische Aufnahme mit einer Außenwand des Schutzgehäuses ebenfalls stoffschlüssig verbunden ist. Zur Verbindung der metallischen Aufnahme mit der Außenwand des Schutzgehäuses kann eine Schweißverbindung eingesetzt werden.

Ist das Schutzgehäuse als Ganzes biokompatibel ausgestaltet, kann dieses direkt implantiert werden und über fest angeschlossene oder lösbare elektrische Leitungen mit dem Verbraucher verbunden werden, von dessen Implantationsort man somit unabhängig ist, wie dies auch in der gleichlaufend eingereichten Deutschen Patentanmeldung der Anmelderin unter dem Titel "Energieversorgungsmodul für eine implantierbare Vorrichtung" beschrieben ist. Als Materialien für das biokompatible Schutzgehäuse kommen vorzugsweise Titan, Titanlegierungen, Niob, Tantal, implantierbare Stähle oder ein Verbund aus diesen oder anderen implantierbaren metallischen mit keramischen Werkstoffen wie Aluminium-Oxid-Keramik in Betracht, wobei eine Ummantelung des gesamten Schutzgehäuses mit einem biokompatiblen Polymer, wie beispielsweise Silikon, Polytetrafluorethylen (PTFE), Polymethan, Parylen oder dergleichen, sinnvoll sein kann.

Nachfolgend sind vorteilhafte Ausführungsformen der Erfindung anhand der Zeichnungen näher erläutert. Es zeigt:
- Fig. 1: einen schematischen Schaltplan mit einer in einen Verbraucher- und einen Nachladestromkreis eingebundenen Schutzvorrichtung;
- Fig. 2: einen schematischen Schnitt durch eine erste Ausführungsform einer Schutzvorrichtung mit reversibel arbeitendem Schaltorgan;
- Fig. 3: eine schematische perspektivische Sicht auf die Ausführungsform nach Fig. 2;
- Fig. 4: in größerem Maßstab einen Teilausschnitt der Ausführungsform nach Fig. 2;
- Fig. 5: einen schematischen Schnitt durch eine zweite Ausführungsform einer Schutzvorrichtung;
- Fig. 6: einen schematischen Schnitt durch eine dritte Ausführungsform einer Schutzvorrichtung mit einem Schaltorgan in geschlossenem Zustand;
- Fig. 7: einen schematischen Schnitt durch die Ausführungsform nach Fig. 6 mit dem Schaltorgan in geöffnetem Zustand;
- Fig. 8: einen schematischen Schnitt durch eine weitere Ausführungsform einer Schutzvorrichtung mit einem Schaltorgan in geschlossenem Zustand;
- Fig. 9: einen schematischen Schnitt durch die Ausführungsform nach Fig. 8 mit dem Schaltorgan in geöffnetem Zustand;
- Fig. 10: eine schematische Schnittdarstellung noch einer weiteren Ausführungsform einer Schutzvorrichtung mit irreversibel arbeitendem Schaltorgan;
- Fig. 11: eine schematische Schnittdarstellung einer weiteren abgewandelten Ausführungsform einer Schutzvorrichtung;
- Fig. 12: eine schematische Darstellung im Schnitt einer Schutzvorrichtung mit hermetisch diochter Durchführung eines Anschlußkontaktes einer Batterie durch ein Schutzgehäuse;
- Fig. 13: eine schematische perspektivische Sicht auf eine weitere Ausführungsform einer Schutzvorrichtung mit einem Kurzschlußschalter und einem Berststreifen als irreversiblem Öffner;
- Fig. 14: eine schematische Schnittdarstellung der Ausführungsform nach Fig. 13;
- Fig. 15: eine schematische perspektivische Sicht auf noch eine weitere Ausführungsform einer Schutzvorrichtung;
- Fig. 16: einen schematischen Schnitt durch eine Schutzvorrichtung mit hermetisch dichter Durchführung beider Anschlußkontakte der Batterie;
- Fig. 17: einen schematischen Schnitt durch eine Schutzvorrichtung mit zweipoliger Durchführung, wobei die Durchführung sowie zwei Schalt- und Detektororgane in einer Seitenwand des Schutzgehäuses integriert sind.

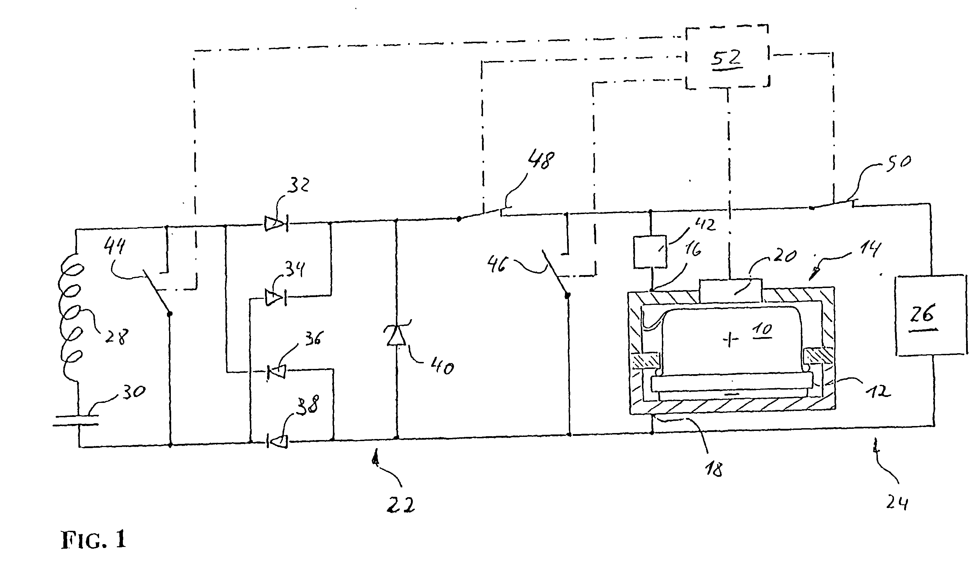

Entsprechend der Fig. 1 ist eine Batterie 10 mit ihrem Batteriegehäuse 12 in einem Schutzgehäuse 14 hermetisch dicht dergestalt aufgenommen, daß ein positiver und ein negativer Anschlußkontakt (in den Fign. jeweils durch + und - gekennzeichnet) der Batterie 10 über Anschlüsse 16 bzw. 18 am Schutzgehäuse abgegriffen werden und mit einem Nachladestromkreis 22 und einem Verbraucherstromkreis 24 verbunden sind. Das Schutzgehäuse 14 ist derart ausgebildet, daß es einem Detektororgan 20 bei einem unzulässigen Betriebszustand der Batterie 10 eine Formänderung aufprägt. Die Batterie versorgt im Verbraucherstromkreis 24 über einen Öffner 50 einen Verbraucher 26, bei dem es sich beispielsweise um eine implantierbare Hörhilfe handeln kann. Der Nachladestromkreis 22 weist eine Empfangsspule 28 auf, die zusammen mit einem Kondensator 30 einen Serienresonanzkreis bildet, der durch einen nicht dargestellten zweiten Serienresonanzkreis eines externen Sendeteils mit gleicher Resonanzlage angeregt wird, wie dies in der EP-B-0 499 939 näher beschrieben ist. Der Nachladestromkreis 22 schließt sich je nach Phase über Dioden 32, 38 bzw. 34, 36, einen Öffner 48, eine Überstromsicherung 42 und die im Schutzgehäuse 14 aufgenommene Batterie 10. Eine Zenerdiode 40 schützt die Batterie 10 vor zu hoher Spannung des Nachladestromkreises. Parallel zu der Empfangsspule 28 und dem Kondensator 30 ist ein Schließer 44 vorgesehen. Ein weiterer Schließer 46 ist parallel zur Batterie 10 und der Überstromsicherung 42 angeordnet.

Wie durch strichpunktierte Linien in Fig. 1 angedeutet, betätigt das Detektororgan 20 die Schaltorgane 44, 46, 48 und 50, die Teil der Schutzvorrichtung sind. Dies kann entweder direkt, beispielsweise durch mechanische Kopplung von Detektororgan und einem oder mehreren Schaltorganen, oder über eine optionale Auswerteelektronik 52 erfolgen, welche die Formänderung des Detektororgans erfaßt und ein oder mehrere Schaltorgane elektrisch bzw. elektromechanisch betätigt. Es versteht sich, daß nicht alle Schaltorgane 44, 46, 48 und 50 vorhanden sein müssen, und daß die Einteilung, welche der Schaltorgane direkt oder über die optionale Auswerteelektronik 52 betätigt werden, je nach Einsatzzweck und gewünschter Redundanz der Schutzvorrichtung variiert werden kann.

Die in Fig. 1 gezeigte Stellung der Schaltorgane 44, 46, 48 und 50 entspricht einer Grundposition bei normalem Betrieb. Im Falle eines unzulässigen Betriebszustandes der Batterie 10 wird wenigstens eines dieser Schaltorgane betätigt.

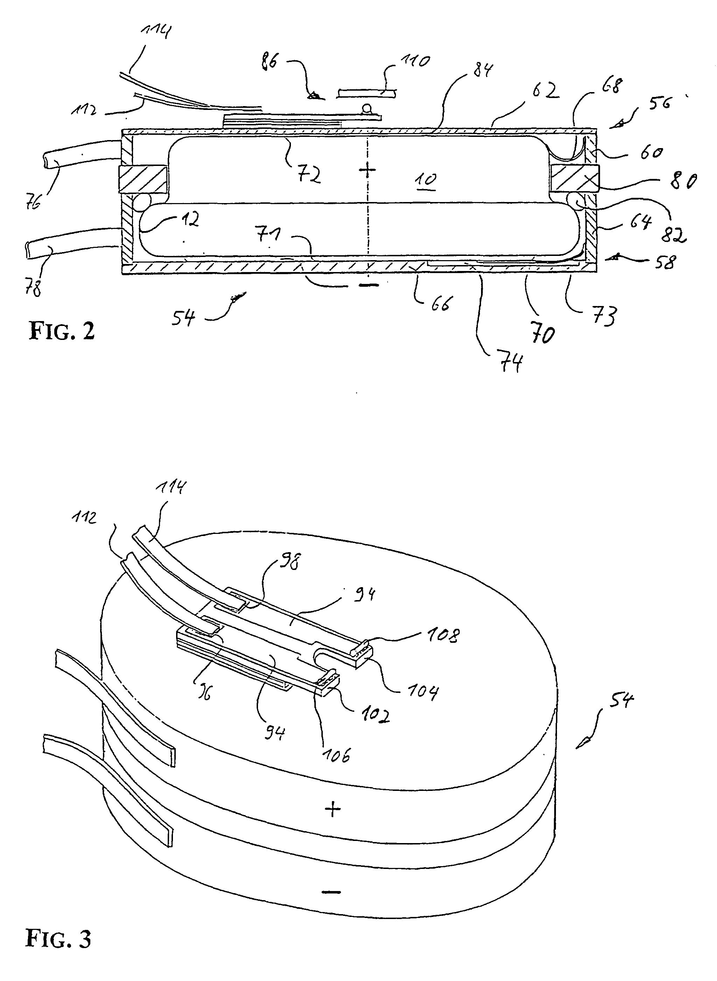

Eine erste Ausführungsform einer Schutzvorrichtung ist in den Fign. 2 bis 4 dargestellt und umfaßt ein hermetisch dichtes Schutzgehäuse 54 mit einem becherförmigen Deckel 56 und einem ebenfalls becherförmigen Boden 58. Eine hohlzylindrische Seitenwand 60 des Deckels 56 ist mit einer Deckelplatte 62 verschweißt, die als wölbbare Membran das Detektororgan der Schutzvorrichtung bildet. Der Boden 58 wird von einer hohlzylindrischen Seitenwand 64 und einer mit dieser verschweißten Bodenplatte 66 gebildet. Die Batterie 10, bei der es sich um eine übliche wiederaufladbare Knopfzelle handelt, ist im Inneren des Schutzgehäuses 54 aufgenommen, wobei der positive Anschlußkontakt vom Batteriegehäuse 12 über eine Kontaktlasche 68 abgegriffen wird, die mit der Innenseite der Seitenwand 60 kontaktiert ist. Der negative Anschlußkontakt der Batterie 10 wird von einer Stirnfläche 71 des Batteriegehäuses 12 mittels einer Kontaktlasche 70 abgegriffen und von innen an die Seitenwand 64 geführt, wobei eine Aussparung 74 im Randbereich der Bodenplatte 66 ermöglicht, daß die Stirnfläche 71 des Batteriegehäuses trotz Verlegung der Kontaktlasche 70 großflächig auf der Bodenplatte 66 aufliegt. Ein über die Kontaktlasche 70 geschobener Isolationsschlauch 73 verhindert einen elektrischen Kontakt zwischen der Kontaktlasche 70 und dem positiven Anschlußkontakt der Batterie 10. Sowohl der Deckel 56 als auch der Boden 58 sind aus einem elektrisch leitfähigen, gegen aus dem Batteriegehäuse austretende Chemikalien resistenten Material (beispielsweise Titan) gefertigt, und weisen elektrische Anschlüsse 76 und 78 auf, die den Anschlüssen 16 bzw. 18 gemäß Fig. 1 entsprechen.

Die Seitenwände 60 und 64 sind über ihre einander zugewandten Stirnflächen unter Zwischenschaltung eines Isolationsrings 80 hermetisch dicht miteinander verschweißt oder verlötet, wobei der Isolationsring einen kleineren Innendurchmesser als die Seitenwände 60 und 64 hat. An der der Bodenplatte 66 zugewandten, sich im Inneren des Schutzgehäuses 54 befindenen Stirnseite des Isolationsrings 80 stützt sich ein O-Ring 82 ab, der auf eine Schulter des Batteriegehäuses 12 in der Art einwirkt, daß die Stirnfläche 71 des Batteriegehäuses 12 leicht gegen die Bodenplatte 66 vorgespannt ist und ohne Spiel anliegt. Als Werkstoff für den Isolationsring 80 kommt z.B. Oxidkeramik in Frage.

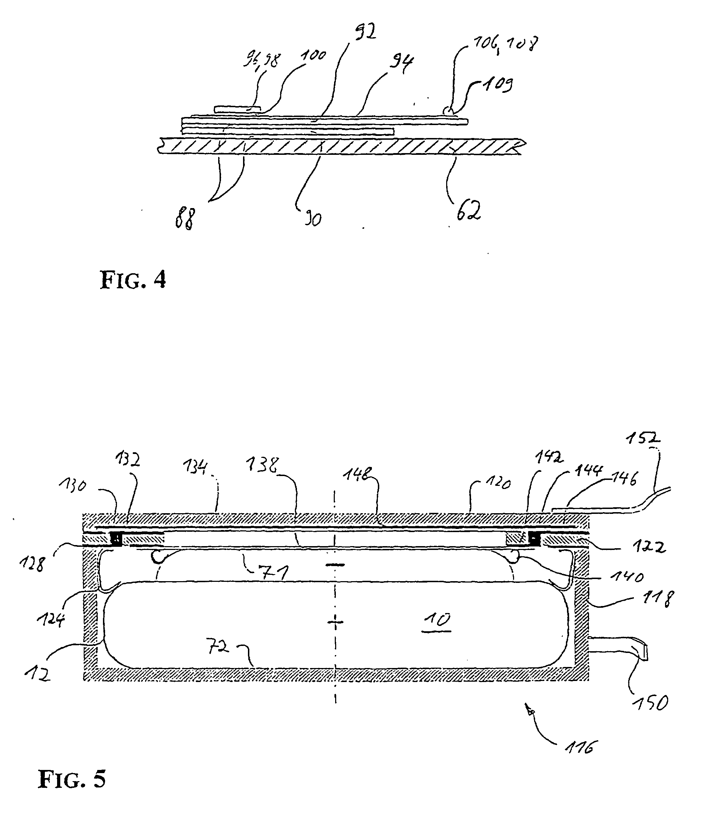

Auf der Deckelplatte 62 ist ein insgesamt mit 86 bezeichnetes Schaltorgan angebracht, welches dem Schließer 44 der Fig. 1 entspricht. Als wesentliches Bauteil besitzt der Schließer 86 einen flexiblen Kontaktträger 92, beispielsweise aus Polyimid, der die Form einer etwa rechteckigen dünnwandigen Platte hat, deren eine kurze Seite einen U-förmigen Einschnitt aufweist, so daß zwei Federarme 102, 104 entstehen. Entlang der beiden längeren Seiten sind auf der Oberseite des Kontaktträgers 92 Metallisierungen 94 angebracht, die sich bis in die Federarme 102 bzw. 104 erstrecken, wo auf den Metallisierungen 94 je ein Abschnitt eines Platindrahtes als Kontakt 106 bzw. 108 über eine Lötverbindung 109 angelötet ist. In der Nähe der zweiten kurzen Seite des Kontaktträgers 94 ist mittels einer Lötschicht 100 eine Kontaktplatte 96 und 98 jeweils mit einer der beiden Metallisierungen 94 verbunden. Dabei tragen die Kontaktplatten 96 und 98 je einen Anschluß 112 bzw. 114, so daß der Anschluß 112 elektrisch mit dem Kontakt 106 und der Anschluß 114 elektrisch mit dem Kontakt 108 verbunden ist. In geringem Abstand über den Kontakten 106 und 108 ist eine Kontaktbrücke 110 angeordnet, mit der die Kontakte 106, 108 in Berührung bringbar sind, um diese elektrisch kurzzuschließen. Der flexible Kontaktträger 92 ist über einen mehrschichtigen Aufbau mit der Deckelplatte 62 dergestalt verbunden, daß die Kontakte 106, 108 mittig über der Deckelplatte 62 angeordnet sind und in der Draufsicht entlang einer Symmetrieachse der runden Deckelplatte 62 verlaufen. Wie in Fig. 4 dargestellt, umfaßt der mehrschichtige Aufbau zwischen dem Kontaktträger 92 und der Deckelplatte 62 ausgehend von der der Deckelplatte 62 zugewandten Unterseite des Kontaktträgers 92 eine Klebschicht 88, eine Distanzplatte 90 und eine zweite Klebschicht 88. Der mehrschichtige Aufbau erstreckt sich etwa von der die Kontaktplatten 96, 98 aufweisenden kurzen Seite des Kontaktträgers 92 bis zum Grund des U-förmigen Einschnitts, der die beiden Federarme 102, 104 trennt, so daß diese frei in genau vorgegebenem Abstand über der Deckelplatte 62 stehen.

Die Kontaktlasche 68 kann als Schmelzsicherung ausgebildet sein, welche die elektrische Verbindung zwischen dem positiven Anschlußkontakt des Batteriegehäuses 12 und dem Anschluß 76 unterbricht, wenn der über sie fließende Strom einen Grenzwert überschreitet. In diesem Fall muß zwischen einer der Deckelplatte 62 zugewandten Stirnfläche 72 des Batteriegehäuses 12 und der Deckelplatte 62 eine Isolierung vorgesehen sein.

Zwischen der der Stirnfläche 72 des Batteriegehäuses 12 zugewandten Unterseite der Deckelplatte 62 und der Stirnfläche 72 befindet sich ein Spalt 84 vorgegebener Dicke, der eine zulässige natürliche Atmung des Batteriegehäuses 12 bei unterschiedlichen Betriebsbedingungen ausgleicht. Dehnt sich das Batteriegehäuses 12 weiter aus, legt sich die Stirnseite 72 des Batteriegehäuses an die Deckelplatte 62 an und prägt dieser eine Wölbung auf wobei das übrige Schutzgehäuse 54, welches steifer als die Deckelplatte 62 ausgelegt ist, nur wenig verformt wird. Somit wird eine Volumenzunahme des Batteriegehäuses 12 gezielt in eine Wölbung der als Membran ausgebildeten Deckelplatte 62 umgewandelt. Gleiches gilt bei Austritt von Chemikalien aus dem Batteriegehäuse 12, welche zu einem Druckanstieg im Inneren des Schutzgehäuses 54 führen, ohne daß eine Dickenzunahme des Batteriegehäuses 12 erfolgen muß. Durch die Wölbung der Deckelplatte 62 nähern sich die Kontakte 106 und 108 der Kontaktbrücke 110, um schließlich bei Erreichen derselben die Anschlüsse 112 und 114 und über diese den Nachladestromkreis 22 elektrisch kurzzuschließen, wobei eine weitere Energiezufuhr zur Batterie unterbunden wird. Durch die flexible Gestaltung der Federarme 102, 104 werden diese beim Schließen des Schaltorgans 86 nicht beschädigt, so daß der Schließer 86 prinzipiell reversibel arbeitet: Bei abnehmendem Innendruck im Schutzgehäuse 54 bzw. zurückgehender Volumenzunahme des Batteriegehäuses 12 nimmt das Schaltorgan 86 wieder seine in Fig. 2 wiedergegebene Grundposition ein.

Die Wölbung der Deckelplatte 62, die zu einer Betätigung des Schaltorgans 86 führt, beträgt in der Regel weniger als 300 µm, wobei das Schutzgehäuse 54 beispielsweise einen Außendurchmesser von etwa 18 mm bei einer Höhe von weniger als 5,5 mm, gemessen von der Bodenplatte 66 bis zur Deckelplatte 62, hat.

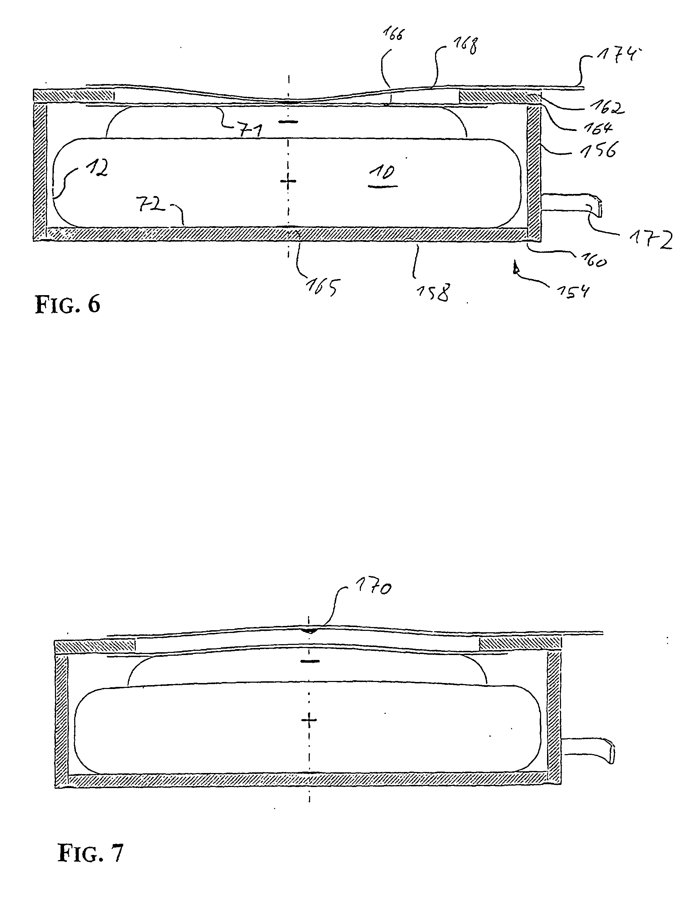

Die Fig. 5 zeigt eine zweite Ausführungsform einer Schutzvorrichtung, welche ein Schutzgehäuse 116 mit becherförmigem einteiligem Boden 118 aus einem elektrisch leitfähigen Material besitzt. Das Schutzgehäuse 116 wird von einem ebenfalls elektrisch leitfähigen Deckel 120 abgeschlossen, wobei zwischen dem Deckel 120 und dem Boden 118 ein Isolierring 122 aus Oxidkeramik eingelötet ist. Der Isolierring 122, dessen Innendurchmesser kleiner ist als derjenige der Seitenwand des Bodens 118, trägt elektrisch gegeneinander isoliert an seiner Unterseite eine Membran 138 und an seiner Oberseite eine Kontaktmembran 134. Beide Membranen 134 und 138 sind aus elektrisch leitfähigem Material gefertigt, wobei die Kontaktmembran 134 mit ihrer Oberseite gegenüber dem benachbart angeordneten Deckel 120 mittels einer Isolierschicht 148 elektrisch isoliert ist und über eine Metallisierung 132, eine Durchkontaktierung 130 und eine Lötschicht 128 auf das elektrische Potential des Bodens 118 gebracht wird. Die Batterie 10 ist vom Boden 118, der Unterseite des Isolierrings 122 und der Membran 138 hermetisch dicht umschlossen, und ihr positiver Anschlußkontakt ist über die Stirnfläche 72 mit der inneren Grundfläche des Bodens 118 verbunden. Eine Feder 124 ist zwischen einer Schulter des Batteriegehäuses 12 und dem Übergangsbereich zwischen dem Isolierring 122 und der Seitenwand des Bodens 118 angeordnet und dient der Zentrierung sowie spielfreien Anlage der Stimfläche 72 des Batteriegehäuses 12 an der Grundfläche des Bodens 118. Die Feder 124 steht gleichzeitig in elektrischem Kontakt mit der Seitenwand des Bodens 118, der Lötschicht 128 und dem positiven Anschlußkontakt der Batterie 10, der sich bis in den Bereich der Schulter erstreckt, an der die Feder 124 anliegt. Der negative Anschlußkontakt der Batterie 10 ist über die Stirnfläche 71 des Batteriegehäuses 12 sowie über eine optionale Feder 140 mit der Unterseite der Membran 138 kontaktiert. Eine Metallisierung 142 an der Unterseite des Isolierrings 122, eine Durchkontaktierung 144 durch den Isolierring 122 sowie eine Lötschicht 146 schließen die elektrische Verbindung zwischen der Membran 138 und dem Deckel 120, von dem das negative Potential über einen Anschluß 152 abgegriffen wird. Ein Anschluß 150 an der äußeren Seitenwand des Bodens 118 dient dem Abgriff des positiven Potentials der Batterie 10.

Während also die Membran 138 mit dem negativen Anschlußkontakt der Batterie 10 in Verbindung steht, ist die von der Membran 138 in einem der Dicke des Isolierrings 122 entsprechenden Abstand befindliche Kontaktmembran 134 mit dem positiven Anschlußkontakt der Batterie 10 kontaktiert. Dieser Abstand ist so bemessen, daß bei einem unzulässigen Betriebszustand der Batterie 10 der Membran 138 eine Wölbung aufgeprägt wird, die ausreicht, mit der Kontaktmembran 134 in elektrisch leitenden Kontakt zu gelangen, so daß die Batterie 10 elektrisch kurzgeschlossen wird. Ferner kann ein Abschnitt der Lötverbindung 146 als Schmelzsicherung dimensioniert sein, die irreversibel durchbrennt, falls ein Nachlade- oder ein Entladestrom einen vorgegebenen Grenzwert überschreitet. Eine weitere Energiezufuhr und -abgabe über die Anschlüsse 150, 152 ist damit unterbunden.

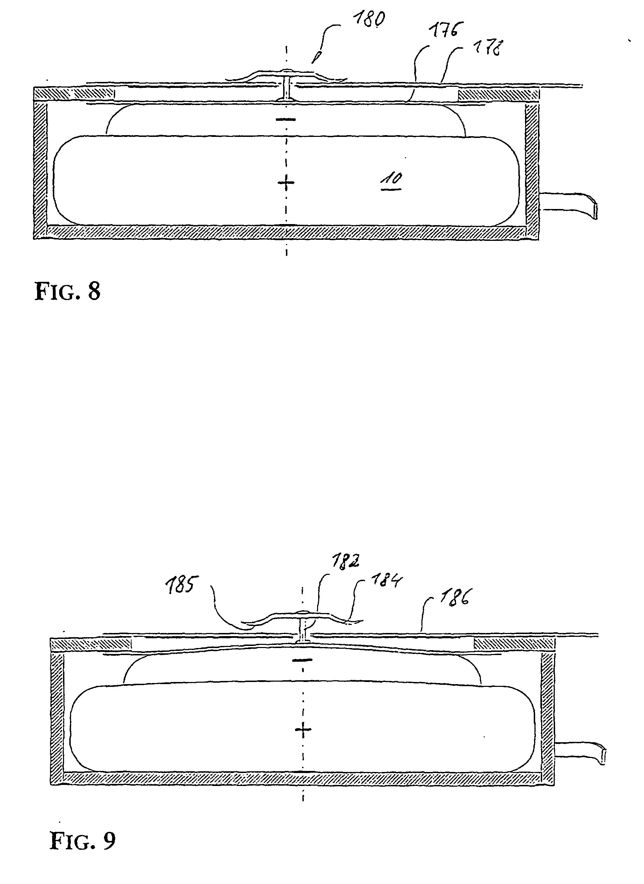

Entsprechend den Fign. 6 und 7 hat eine dritte Ausführungsform einer Schutzvorrichtung ein Schutzgehäuse 154, dessen elektrisch leitfähiger Boden eine Seitenwand 156 in der Form eines Rohrabschnitts aufweist, die stirnseitig von einer Bodenplatte 158 verschlossen ist. Eine umlaufend geschlossene Schweißnaht 160 verbindet die Bodenplatte 158 mit der Seitenwand 156. An der zweiten Stirnseite der Seitenwand 156 ist über eine Lötschicht 164 ein keramischer Isolierring 162 festgelegt, der einen runden Durchbruch mit einem Innendurchmesser besitzt, der kleiner ist als der Innendurchmesser der Seitenwand 156, wobei auf einer in Richtung auf die Bodenplatte 158 weisenden Unterseite des Isolierrings 162 eine den Durchbruch überspannende Membran 166 aus elektrisch leitfähigem Material angebracht ist und ein hermetisch dichter Innenraum entsteht. In diesem Innenraum ist die Batterie 10 dergestalt aufgenommen, daß ihr positiver Anschlußkontakt mittels der Stirnfläche 72 in elektrischem Kontakt mit der Bodenplatte 158 steht. Ein im Zentrum der Stirnfläche 72 befindlicher Schweißpunkt 165 zwischen der Stirnfläche 72 und der Bodenplatte 158 garantiert einen Kontakt mit niedrigstem Übergangswiderstand und eine definierte Lage der Batterie 10 mit Bezug zur Bodenplatte 158. Anstelle des Schweißpunktes 165 kann auch eine Lötverbindung oder eine elektrisch leitende Klebeverbindung vorgesehen sein. Das negative Potential der Batterie 10 wird über deren Stirnfläche 71 von unten an die Membran 166 herangeführt, wobei ein Leitkleber vorgesehen sein kann, um den Übergangswiderstand zu minimieren. Vorteilhaft liegt die Batterie mit ihren Stirnflächen 71, 72 leicht vorgespannt zwischen der Membran 166 und der Bodenplatte 158. Eine elektrisch leitende Kontaktmembran 168 mit zentralem, nach unten weisendem Kontaktpunkt 170 ist an der Oberseite des Isolierrings 162 mit diesem verbunden und überspannt dessen Durchbruch. Die Kontaktmembran 168 ist nach innen in Richtung auf die Membran 166 federnd vorgewölbt und steht mittels des Kontaktpunkts 170 in elektrischem Kontakt mit der Membran 166. In dieser Position der Kontaktmembran 168 kann eine Energiezufuhr und -abgabe zu bzw. von der Batterie 10 über einen mit der Kontaktmembran 168 elektrisch verbundenen Anschluß 174 und einen mit der Außenseite der Seitenwand 156 kontaktierten Anschluß 172 erfolgen. Kommt es zu einem unzulässigen Betriebszustand der Batterie 10, wird die Membran 166 und mit dieser die Kontaktmembran 168 so weit nach außen gewölbt, daß die Kontaktmembran 168 über eine labile Gleichgewichtslage hinaus nach außen umspringt und der elektrische Kontakt zwischen den beiden Membranen 166, 168 auch unterbrochen bleibt, wenn die Membran 166 wieder in ihre Ausgangsposition gemäß Fig. 6 zurückgelangen sollte.

Eine vierte Ausführungsform einer in den Fign. 8 und 9 veranschaulichten Schutzvorrichtung weist ein Schutzgehäuse auf, welches sich von dem Schutzgehäuse 154 im wesentlichen nur durch die Ausgestaltung der Membranen 166, 168 und ihrer elektrischen Kontaktierung unterscheidet. Eine der Membran 166 entsprechende Membran 176 trägt zentral an ihrer Oberseite eine insgesamt mit 180 bezeichnete Kontaktfeder mit einem Stift 182 und einem Federteller 184. Der zylindrischen Stift 182 ist mit einer Stirnseite an der Membran 182, auf welcher er mit seiner Längsachse etwa senkrecht steht, festgelegt und mit seiner zweiten Stirnseite mit dem Federteller 184 verbunden. Dabei durchsetzt der Stift 182 einen Durchbruch in einer Kontaktmembran 178, die der Kontaktmembran 168 des Schutzgehäuses 154 entspricht, wobei der Federteller 184 in einer Grundposition gemäß Fig. 8 mit einer in der Nähe seines Außenrandes befindlichen, der Oberseite der Kontaktmembran 178 zugewandten Kontaktfläche 185 mit der Kontaktmembran 178 in elektrisch leitfähigem Kontakt steht. In der Grundposition verlaufen die Membranen 176, 178 etwa parallel, und die Kontaktfläche 185 liegt federnd vorgespannt an der Kontaktmembran 178 auf. Bei einem unzulässigen Betriebszustand der Batterie 10 wird der Membran 176 eine Wölbung nach außen in Richtung auf die Kontaktmembran 178 aufgezwungen, die sich im wesentlichen nicht verformt und ihre Lage beibehält. Die Wölbung der Membran 176 reicht aus, die Kontaktfläche 185 von der Kontaktmembran 178 abzuheben und den elektrischen Kontakt reversibel zu unterbrechen, ist aber nicht so groß, daß die Oberseite der Membran 176 mit der Unterseite der Kontaktmembran 178 in Kontakt kommt. Um letzteres auch bei noch stärkerer Wölbung der Membran 176 zu gewährleisten, ist die Unterseite der Kontaktmembran 178 mit einer Isolierschicht 186 versehen.

Eine fünfte Ausführungsform einer Schutzvorrichtung gemäß Fig. 10 umfaßt ein Schutzgehäuse 190 mit einem einteiligen becherförmigen Boden 192, einem ebenfalls becherförmigen Deckel 194 und einer Membran 196, die mittels einer Schweißverbindung 198 an den einander zugewandten Stirnseiten des Bodens 192 und des Deckels 194 mit diesen verbunden ist, wobei der Boden 192, der Deckel 194 und die Membran 196 vorzugsweise aus dem gleichen elektrisch leitenden Werkstoff bestehen. Die Membran 196 unterteilt das Schutzgehäuse 190 horizontal in einen oberen Deckelbereich und einen unteren, hermetisch dichten Raum, der die Batterie 10 dergestalt aufnimmt, daß ihr positiver Anschlußkontakt über einen Leitkleber 200 mit geringem Übergangswiderstand über der Stirnfläche 72 abgegriffen und mit einer der Membran 196 zugewandten Innenseite des Bodens 192 kontaktiert ist. Auf der Stirnfläche 71 der Batterie 10 ist ein Isolator 218 aufgebracht, der verhindert, daß der negative Anschlußkontakt oder Pol der Batterie 10 mit der Membran 196 in Kontakt kommt. Das negative Potential der Batterie wird an einer der Stirnfläche 71 benachbarten Seitenwand des Batteriegehäuses 12 vom negativen Anschlußkontakt über eine Kontaktfeder 212 abgegriffen und durch eine hermetisch dichte gegenüber einer Seitenwand des Bodens 192 elektrisch isolierte Durchführung 214 durch die Seitenwand hindurch mit einem Anschluß 216 verbunden. Auf der Oberseite der Membran 196 ist im Zentrum ein Stößel 222 angebracht, der in einen Durchbruch im Deckel 194 hineinragt. In geringem Abstand oberhalb einer Oberkante des Stößels 222 befindet sich ein insgesamt mit 204 bezeichnetes, den Durchbruch überspannendes Berstelement. Dieses umfaßt auf seiner der Oberseite des Deckels 194 zugewandten Seite ein Substrat 206 mit einer Leitschicht 208. Bei dem Substrat 206 kann es sich um eine Keramik, beispielsweise Oxidkeramik, ein Glas oder dergleichen handeln. Die Leitschicht 208 ist auf einer Seite des Durchbruchs im Deckel 194 mit diesem über eine Kontaktlasche 202 kontaktiert und auf einer gegenüberliegenden Seite des Durchbruchs mit einem Anschluß 210 versehen, von dem das positive Potential der Batterie 10 abgegriffen wird. Ein Spalt 220 zwischen dem Isolator 218 auf der Stirnseite 71 der Batterie 10 und der Membran 196 verhindert eine Wölbung der Membran 196 bei geringer Ausdehnung der Batterie 10, z.B. infolge von Temperaturerhöhung. Bei einem unzulässigen Betriebszustand der Batterie 10 wird jedoch der Membran 196, sei es durch Volumenzunahme der Batterie 10 und/oder Austritt von Chemikalien aus dem Inneren der Batterie 10 mit der Folge eines Druckanstiegs im hermetisch dichten Batterieaufnahmeraum des Schutzgehäuses 190, eine Wölbung aufgeprägt, die ausreicht, daß der Stößel 222 das Berstelement 204 zerstört, so daß die Leitschicht 208 zwischen der Kontaktlasche 202 und dem Anschluß 210 irreversibel unterbrochen wird.

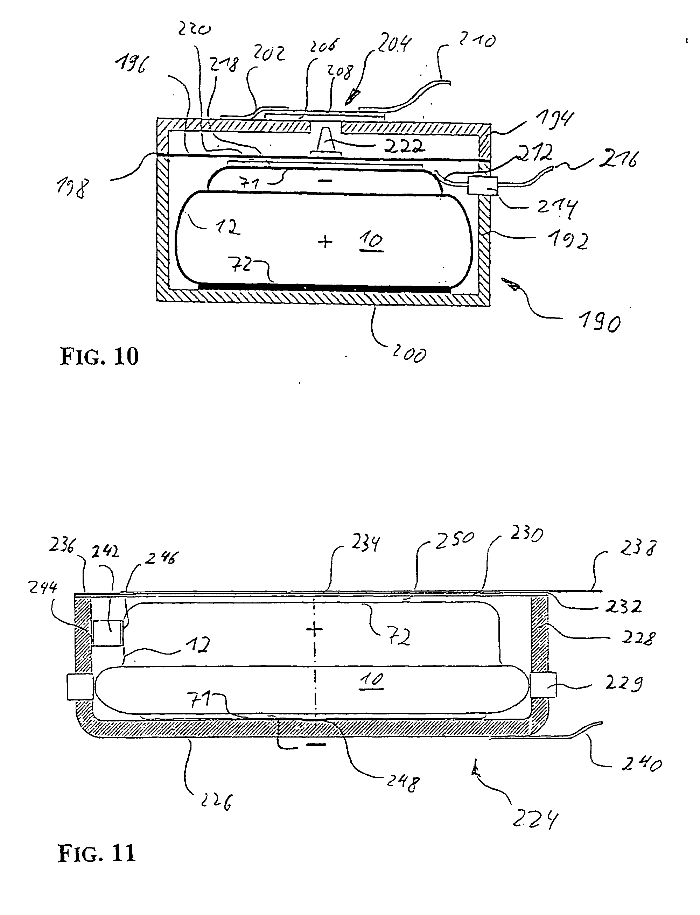

Wie in Fig. 11 gezeigt wird, weist eine sechste Ausführungsform einer Schutzvorrichtung ein Schutzgehäuse 224 mit einem flachen elektrisch leitfähigen schalenförmigen Boden 226 auf, der über seine nach oben zeigende Stirnfläche unter Zwischenschaltung eines keramischen Isolierrings 229 mit einer Seitenwand 228 verbunden ist, welche die Form eines Rohrabschnitts besitzt. Die Seitenwand 228 ist an ihrer oberen Stirnseite mit einer elektrisch leitfähigen Membran 230 hermetisch dicht abgeschlossen. Auf der nach oben weisenden äußeren Seite der Membran 230 ist eine Isolierschicht 232 und auf dieser eine elektrisch leitende, spröde berstende Berstschicht 234 aufgebracht. Die Berstschicht 234 ist im Bereich der Seitenwand 228 an einer ersten Stelle über eine Kontaktierung 236 elektrisch leitend mit der Membran 230 und an einer zweiten, diametral gegenüberliegenden Stelle mit einem Anschluß 238 verbunden, wobei die Berstschicht 234 sich zwischen diesen beiden Stellen streifenförmig erstreckt. Der Anschluß 238 dient dem Abgriff des positiven Potentials der Batterie 10, die vom Schutzgehäuse 224 aufgenommen ist. Dabei wird der positive Anschlußkontakt der Batterie 10 von einer Seitenwand des Batteriegehäuses 12 mittels einer Kontaktlasche 242 abgegriffen, die über Punktschweißverbindungen 244 und 246 den elektrischen Kontakt mit der Innenseite der Seitenwand 228 bildet. Der negative Anschlußkontakt der Batterie 10 steht über eine zentral auf der Stirnfläche 71 angebrachte Punktschweißverbindung 248 mit der Innenseite des Bodens 226 in Verbindung und ist von außerhalb des Schutzgehäuses 224 mittels eines Anschlusses 240 zugänglich. Es versteht sich, daß alternativ zu den Punktschweißverbindungen 244, 246 und 248 auch zum Beispiel Lötverbindungen oder elektrisch leitende Klebeverbindungen vorgesehen sein können. Zwischen der Stirnseite 72 und der Membran 230 befindet sich ein Spalt 250, um bei natürlicher Atmung der Batterie ein Ansprechen der Berstschicht 234 zu verhindern. Erst bei einem unzulässigen Betriebszustand der Batterie 10 wird der Membran 230 eine Wölbung aufgezwungen, welche die Berstschicht 234 irreversibel zerstört und somit die elektrische Verbindung zwischen dem positiven Anschlußkontakt der Batterie 10 und dem Anschluß 238 unterbricht.

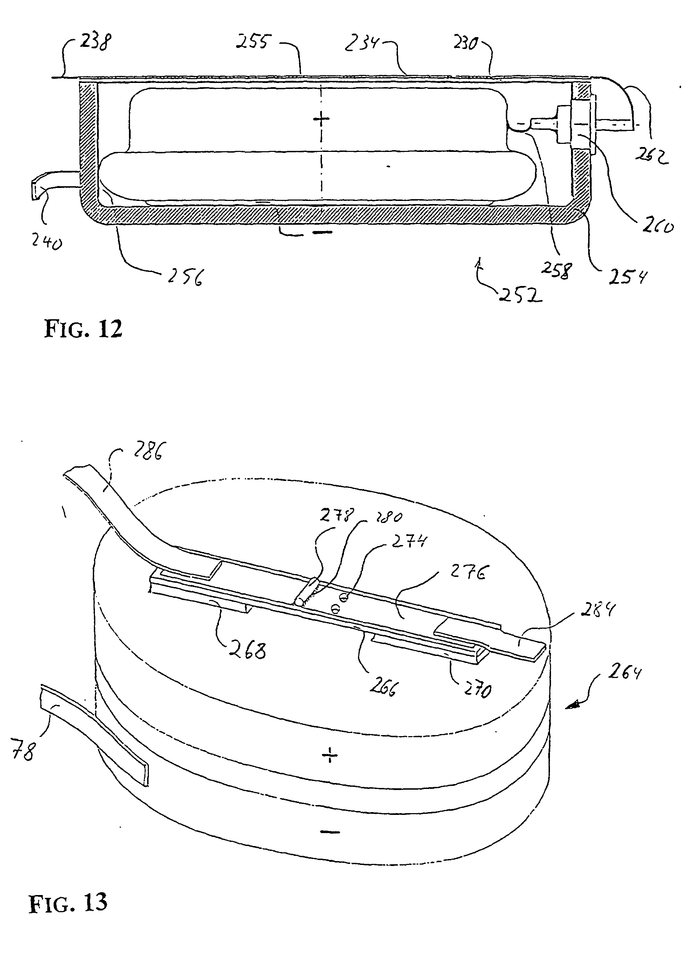

Eine siebte Ausführungsform einer Schutzvorrichtung ist in Fig. 12 wiedergegeben und umfaßt ein Schutzgehäuse 252, welches sich vom Schutzgehäuse 224 im wesentlichen nur durch die Ausgestaltung des Bodens 226 und den Abgriffs des positiven Anschlußkontakts der Batterie 10 unterscheidet. Das Schutzgehäuse 252 besitzt einen Boden 254, dessen Seitenwände bis an die Membran 230 geführt und mit dieser hermetisch dicht verschweißt sind, so daß der Isolierring 229 des Schutzgehäuses 224 entfällt. Der positive Anschlußkontakt der Batterie 10 wird über eine Kontaktlasche 258 von einer Seitenwand des Batteriegehäuses 12 abgegriffen, mittels einer hermetisch dichten gegenüber der Seitenwand des Bodens 254 elektrisch isolierten Durchführung 260 durch die Seitenwand nach außen geführt und von einer Kontaktlasche 262 in Verbindung mit der elektrisch leitfähigen Berstschicht 234 gebracht, die durch eine Isolierschicht 255 vollständig gegenüber der Membran 230 und dem Boden 254 isoliert ist.

Eine Isolierschicht 256 kleidet den Innenraum des Schutzgehäuses 252 im Bereich der Membran 230 und der Seitenwände des Bodens 254 aus und verhindert einen elektrischen Kontakt zwischen dem positiven Anschlußkontakt der Batterie 10 und der Membran 230 bzw. der Seitenwände des Bodens 254.

Entsprechend den Fign. 13 und 14 verwendet eine achte Ausführungsform einer Schutzvorrichtung ein abgewandeltes Schutzgehäuse 264, welches weitestgehend dem Schutzgehäuse 54 der Fign. 2 bis 4 entspricht, jedoch nicht dessen Schaltorgan 86 benutzt und bei dem der Abgriff des positiven Anschlußkontakts der Batterie 10 in abgeänderter Form erfolgt. Ein rechteckiger Berststreifen 266 ist über Klebverbindungen 268 und 270 jeweils etwa im äußeren Drittel seiner längeren Seite an der Deckelplatte 62 des Schutzgehäuses 264 in vorgegebenem Abstand von außen angekoppelt, so daß zwischen den Klebverbindungen 268 und 270 eine Überbrückungszone 272 entsteht. Eine Symmetrielinie in Richtung der längeren Seite des Berststreifens 266 verläuft dabei im wesentlichen parallel zu einer Mittelpunktslinie der runden Deckelplatte 62, und ein Zentrum der Überbrückungszone 272 befindet sich oberhalb des Mittelpunkts der Deckelplatte 62. Auf einer Oberseite des Berststreifens 266 ist eine Leitschicht 276 aufgebracht, die sich über nahezu die gesamte Oberseite des Berststreifens 266 erstreckt und die im Bereich der einen kurzen Seite des Berstreifens mittels einer Kontaktlasche 284 mit der Deckelplatte 62 und im Bereich der anderen kurzen Seite mit einem Anschluß 286 kontaktiert ist. Somit ist eine elektrische Verbindung zwischen dem Anschluß 286 und dem positiven Anschlußkontakt der Batterie 10 hergestellt. Im Bereich der klebschichtfreien Überbrückungszone 272 ist nahe einer Seitenhalbierenden der längeren Seite des Berststreifens 266 in diesem eine Sollbruchstelle in Form einer Perforation 274 vorgesehen. Die Sollbruchstelle kann dabei natürlich auch auf andere geeignete Weise, beispielsweise durch Kerben, Ritzen oder Verjüngen des Berststreifens 266, erzeugt werden. Benachbart zur Perforation 274 ist mittels einer Lötverbindung 280 ein Drahtabschnitt als Kurzschlußkontakt 278 fixiert, über dem in vorgegebenem Abstand ein Gegenkontakt 282 steht. Der Gegenkontakt 282 steht über eine Kontaktlasche 288 mit der Seitenwand 64, d.h. mit dem negativen Anschlußkontakt der Batterie 10, in elektrischem Kontakt. Bei einem unzulässigen Betriebszustand der Batterie 10 wird der Deckelplatte 62 als wölbbare Membran eine Wölbung aufgeprägt, die sich über die Klebverbindungen 268, 270 auf den Berststreifen 266 überträgt, der gemäß Fig. 14 entlang der Perforation 274 bricht. Der Kurzschlußkontakt 278 wird gegen den Gegenkontakt 282 gedrückt, und der Kurzschlußstrom zwischen dem positiven und dem negativen Anschlußkontakt der Batterie 10 genügt, ein evtl. verbleibendes Leitschichtfragment 290, welches die Bruchstelle zumindest teilweise überspannt, durchzubrennen. Dadurch ist der Abgriff des positiven Potentials der Batterie 10 über den Anschluß 286 irreversibel unterbrochen.

Da es notwendig ist, die zum Bruch des Berststreifens 266 notwendige Wölbung im Bereich einiger hundert µm, vorzugsweise im Bereich von weniger als 200 µm, vorherzusagen, muß die vorbestimmte Geometrie des Berststreifens 266 sehr genau eingehalten werden. Als Material für den Berststreifen 266 kommt beispielsweise Glas oder Keramik in Betracht, wobei es vorteilhaft sein kann, dem Berststreifen 266 eine mechanische Vorspannung aufzuprägen, die den Abstand der Bruchufer nach dem Bersten der Sollbruchstelle vergrößert. Hierzu kann der Berststreifen 266 als Verbundelement aus wenigstens einem Glas- oder Keramikwerkstoff und wenigstens einem Metall ausgeführt werden, die miteinander verklebt oder verlötet sind. Eine Vorspannung des Berststreifens 266 kann ebenfalls durch Verwendung eines Metalls mit Formgedächtnis (Memory-Effekt) induziert werden.

Es ist ferner möglich, den Berststreifen 266 aus einem piezoelektrischen Material herzustellen oder zumindest mit einer derartigen Schicht zu versehen. Bei Verformungen des Berststreifens 266, die nicht zu dessen Bruch führen, also noch keinen unzulässigen Betriebszustand der Batterie 10 signalisieren, können von dem piezoelektrischem Wandler gelieferte elektrische Informationen in Form von Ladungsänderungen von der optionalen Auswerteelektronik 52 abgegriffen werden, um beispielsweise ein dem Öffner 48 oder 50 der Fig. 1 entsprechendes Schaltorgan zu betätigen und ein Nachladen bzw. Entladen der Batterie 10 zu unterbrechen, bevor die Batterie einen unzulässigen Betriebszustand erreicht.

Bei der Ausführungsform gemäß den Fign. 13 und 14 ist denkbar, die Lage der Perforation 274 und des Kurzschlußkontaktes 278 mit Bezug zur Seitenhalbierenden der längeren Seite des Berststreifens 266 gegeneinander zu vertauschen, so daß der Kurzschlußkontakt 278 auf der in Fig. 14 rechten Seite des Bruchufers zu liegen kommt. In diesem Fall kann ein Kurzschlußstrom zwar ein eventuell verbleibendes Leitschichtfragment 290 nicht durchbrennen, wohl aber die Batterie 10 gewollt vollständig entladen, wobei dann die Kontaktlasche 68 nicht als Schmelzsicherung auszulegen wäre, wie dies grundsätzlich möglich ist (vgl. entsprechende Ausführungen zum Schutzgehäuse 54 der Fign. 2 bis 4). Ist eine mehrfach redundante Absicherung nicht erforderlich, ist es ferner denkbar, auf den Kurzschlußkontakt 278 und den Gegenkontakt 282 komplett zu verzichten, nur die irreversible Öffnerfunktion des Berststreifens 266 auszunutzen und diesen so auszulegen, daß in jedem Fall sichergestellt ist, daß beim Bruch des Bertstreifens 266 kein Leitschichtfragment 290 verbleibt.

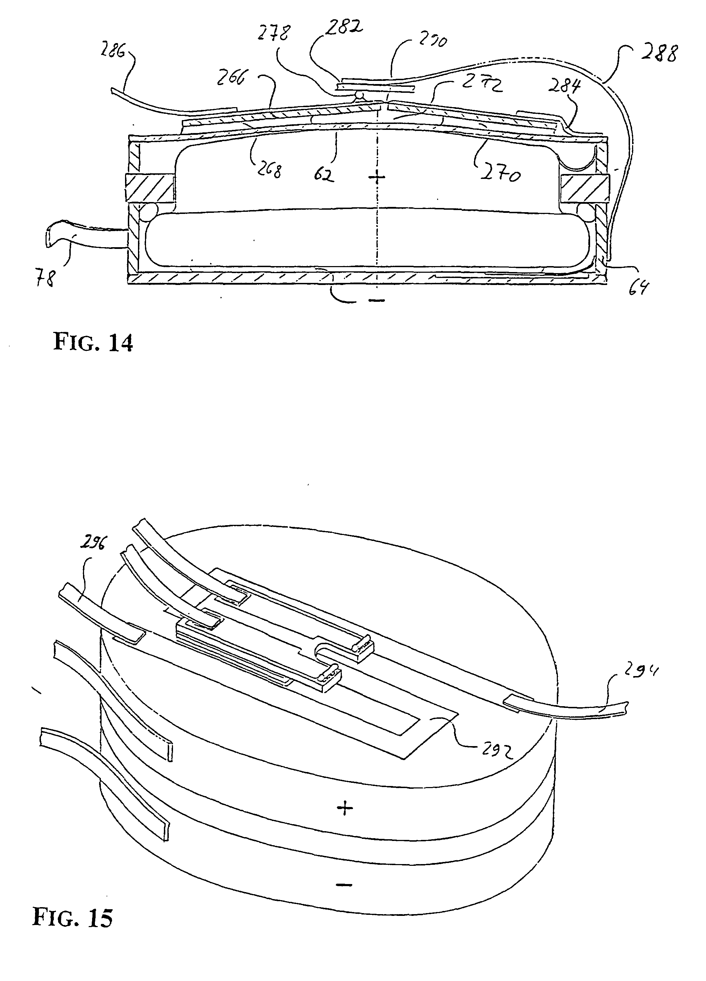

Eine neunte Ausführungsform einer Schutzvorrichtung ist in Fig. 15 gezeigt und unterscheidet sich von der Ausführungsform der Fig. 2 bis 4 im wesentlichen nur dadurch, daß zur Erhöhung der Redundanz ein Dehnungsmeßstreifen 292 mäanderförmig auf der Oberseite der Deckelplatte 62 aufgebracht ist. Der Dehnungsmeßstreifen 292 erfährt bei Wölbung der Deckelplatte 62 eine Formänderung, die zu einer Änderung seines elektrischen Widerstandes führt, der über Anschlüsse 294 und 296 von der Auswerteelektronik 52 erfaßt und beispielsweise zur Betätigung weiterer Schaltorgane verwendet wird, etwa für einen elektrisch betätigbaren Schließer, der vom Schutzgehäuse entfernt plaziert sein kann und in der Funktion dem Schließer 46 oder dem Öffner 50 der Fig. 1 entspricht. Die Auswerteelektronik 52 kann ferner eine nicht gezeigte Warneinrichtung aktivieren, die einen Benutzer über die Fehlfunktion der Batterie 10 in Kenntnis setzt.

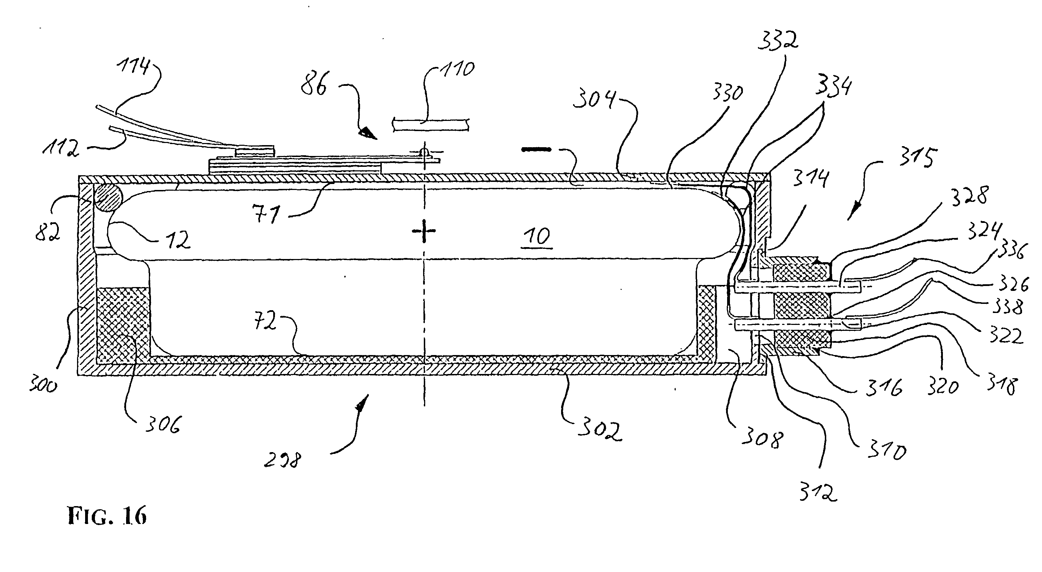

Ein in Fig. 16 wiedergegebenes Schutzgehäuse 298 umfaßt das bereits im Zusammenhang mit dem Schutzgehäuse 54 der Fign. 2 bis 4 beschriebene Schaltorgan 86 und unterscheidet sich vom Schutzgehäuse 54 im wesentlichen nur durch folgende Gestaltungsmerkmale: Ein metallischer, vorzugsweise aus Titan gefertigter Boden ist becherförmig ausgestaltet, wobei eine hohlzylindrische Seitenwand 300 an ihrer unteren Stirnseite einstückig mittels einer Bodenplatte 302 verschlossen ist. An einer oberen Stirnseite der Seitenwand 300 ist eine als wölbbare Membran ausgebildete Deckelplatte 304 hermetisch dicht angeschweißt, welche ebenfalls bevorzugt in Titan ausgeführt ist. Eine becherförmige Aufnahme 306 ist im Inneren des Schutzgehäuses 298 dergestalt aufgenommen, daß ihre zylindrische Seitenwand einen dem Innendurchmesser der Seitenwand 300 entsprechenden Außendurchmesser hat und ihre Bodenplatte auf der Bodenplatte 302 aufliegt. Der Innendurchmesser der Aufnahme 306 ist dem Batteriegehäuse 12 angepaßt, wobei die Batterie 10 mit ihrer Stirnfläche 72 von innen an der Bodenplatte der Aufnahme 306 anliegt und in radialer Richtung innerhalb des Schutzgehäuses zentriert wird. Die Aufnahme 306 besteht aus einem elektrisch isolierenden Kunststoffmaterial, beispielsweise Polytetrafluorethylen (PTFE), und isoliert den positiven Anschlußkontakt der Batterie 10 vom metallischen Schutzgehäuse. Die Aufnahme 306 ist an der Außenseite ihrer Seitenwand mit einer Aussparung 308 versehen und so im Schutzgehäuse 298 eingelegt, das die Aussparung einem in radialer Richtung in der Seitenwand 300 eingebrachten Durchbruch 310 zugewandt ist.

Der O-Ring 82 ist im Eckbereich zwischen der Seitenwand 300 und der Deckelplatte 304 plaziert und stützt sich gegen eine Schulter des Batteriegehäuses 12 ab, welches er nach unten in Richtung auf die Bodenplatte 302 vorspannt, um zu verhindern, daß sich zwischen der Stirnfläche 72, der Bodenplatte der Aufnahme 306 und der Bodenplatte 302 unerwünschte Spalte bilden. Damit sich keine zwei voneinander getrennte Volumina innerhalb des Schutzgehäuses 298 aufbauen, ist der O-Ring 82 in Umfangsrichtung nicht geschlossen, sondern weist einen radialen Spalt auf.

Der zylindrische Durchbruch 310 in der Seitenwand 300 ist an der Außenseite der Seitenwand 300 von einer zylindrischen Planfläche 312 umgeben, in die eine nach außen weisende Schulter 314 einer buchsenförmigen, metallischen, vorzugsweise aus Titan gefertigten Aufnahme 316 eingepaßt und hermetisch dicht verschweißt ist. Die Aufnahme 316 ist Teil einer insgesamt mit 315 bezeichneten Durchführung, die ferner ein keramisches Substrat 318, beispielsweise aus Al₂O₃, sowie metallische Kontaktstifte 322, 324 umfaßt, welche letztere vorzugsweise aus einer Platin-Iridium-Verbindung bestehen. Das zylindrische Substrat 318 ist mit seinem Außendurchmesser dem Innendurchmesser der Aufnahme 316 angepaßt und bis zu einem Bund an der Innenwand der Aufnahme 316 in diese eingesetzt, der sich in axialer Richtung auf der der Schulter zugewandten Seite der Aufnahme 316 befindet. Auf der gegenüberliegenden Seite überragt das Substrat 318 die Aufnahme 316 und ist mit dieser über eine Goldlötverbindung 320 hermetisch dicht verbunden. Die Kontaktstifte 322 und 324, die in Fig. 16 in einer um 90° um die Achse der Aufnahme 316 gedrehten Lage gezeigt sind, durchsetzen das Substrat 318 in axialer Richtung und sind in diesem in gleicher Weise mittels einer Goldlötverbindung 326 hermetisch dicht festgelegt. Sie besitzen eine Länge, die ausreicht, die Durchführung 315 zu beiden Seiten axial zu überragen, wobei sie auf der dem Inneren des Schutzgehäuses 298 zugewandten Seite in die Aussparung 308 hineinstehen. Der Stift 322 ist über eine Kontaktlasche 332 mit dem positiven Anschlußkontakt der Batterie 10 im Bereich der Schulter des Batteriegehäuses 12 kontaktiert, an der sich der O-Ring 82 abstützt. Dieser ist dabei so orientiert, daß die Kontaktlasche 332, ebenso wie eine Kontaktlasche 330, die einen Strompfad zwischen dem negativen Anschlußkontakt der Batterie 10 und dem Kontaktstift 324 bildet, durch den radialen Spalt des O-Rings 82 geführt werden. Beide Kontaktlaschen 330, 332 sind mit einem Isolationsschlauch 334 umgeben. Zwischen der Stirnfläche 71 der Batterie 10 und der Unterseite der Deckelplatte 304 befindet sich in bereits beschriebener Weise ein Spalt, der eine natürliche Atmung des Batteriegehäuses 12 ausgleicht. Dabei berührt der negative Anschlußkontakt der Batterie 10 je nach Betriebszustand die Deckelplatte 304 von unten, wodurch die metallischen Komponenten 300, 302, 304 und 316 des Schutzgehäuses 298 auf das negative Potential der Batterie 10 gelegt werden. Um die genannten Komponenten unabhängig vom Betriebszustand der Batterie 10, d.h. unabhängig von deren Volumensexpansion, definiert auf negativem Potential zu halten, ist an der Durchführung 315 eine Lötbrücke 328 vorgesehen, die sich zwischen dem Kontaktstift 324 und der Aufnahme 316 erstreckt. Außerhalb des Schutzgehäuses 298 werden der positive und der negative Anschlußkontakt der Batterie 10 über Anschlüsse 338 bzw. 336 abgegriffen.

Das Schutzgehäuse 298 läßt sich im Vergleich zum Schutzgehäuse 54 mit geringerem Aufwand fertigen, da der Boden des Schutzgehäuses 298 einstückig ausgeführt ist und kein keramischer Isolationsring 80 verwendet wird. Der besonders kritische Metall-Keramik-Übergang ist auf ein Minimum reduziert und auf ein separat zu fertigendes und zu prüfendes Teil 315 beschränkt. Dies trägt wesentlich zu einer höheren Druckfestigkeit des Schutzgehäuses 298 bei.

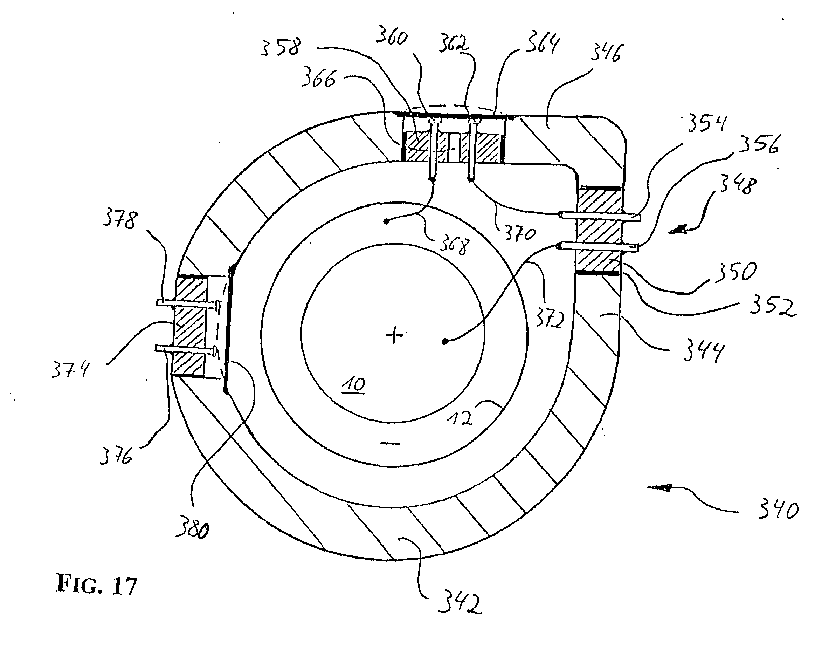

Wie aus Fig. 17 hervorgeht, kann ein Schutzgehäuse 340 in Richtung der kleinsten Ausdehnung der Batterie 10 gesehen statt einer zylindrischen auch eine andere, beispielsweise eine etwa tropfenförmige Querschnittsform haben. In der Ausführungsform des Schutzgehäuses 340 gemäß Fig. 17 wird die Seitenwand von einem Segment 342 in Form eines Dreiviertelkreises sowie zwei sich tangential zu beiden Seiten des Dreiviertelkreises anschließenden linearen Segmenten 344 und 346 gebildet, wobei letztere sich über eine zwischen ihnen liegende Abrundung schließen. Die Seitenwand ist metallisch, vorzugsweise in Titan ausgeführt und bildet zusammen mit einer einstückigen Bodenplatte einen becherförmigen Boden zur Aufnahme der Batterie 10. Eine nicht gezeigte, ebenfalls vorzugsweise aus Titan gefertigte Deckelplatte ist mit der oberen Stirnseite der Seitenwand hermetisch dicht verschweißt. Der Übersichtlichkeit halber ist die Wandstärke der Segmente 342, 344 und 346 vergrößert wiedergegeben. Die Batterie 10 ist im Inneren des Schutzgehäuses 340 durch nicht gezeigte Zentriermittel festgelegt, wobei mindestens der positive Anschlußkontakt der Batterie 10 mit Bezug auf den becherförmigen Boden und die Deckelplatte elektrisch isoliert ist.

Eine insgesamt mit 348 bezeichnete Durchführung unterscheidet sich von der Durchführung 315 der Fig. 16 im wesentlichen durch einen Verzicht auf die Aufnahme 316, so daß ein keramisches Substrat 350 nicht in die Aufnahme sondern direkt in die Seitenwand des Schutzgehäuses 340 hermetisch dicht eingelötet ist, wozu vorzugsweise Goldlot verwendet wird. Das keramische Substrat 350 ist in das lineare Segment 344 eingelötet, es ist aber ebenso möglich, ersteres in dem Kreissegment 342 unterzubringen. Metallische Kontaktstifte 354 und 356 dienen der getrennten Durchführung des negativen bzw. des positiven Anschlußkontakts der Batterie 10 und sind im keramischen Substrat 352 hermetisch dicht eingelötet. Hinsichtlich der bevorzugten Materialwahl für die Kontaktstifte 354, 356 sowie das Substrat 350 sei auf die Ausführungen zur Durchführung 315 verwiesen. Auch bei der Durchführung 348 kann eine der Lötbrücke 328 (siehe Fig. 16) ähnliche elektrische Verbindung zwischen dem Kontaktstift 354 und dem Segment 344 vorgesehen sein, um das Gehäuse definiert auf negatives Potential zu legen.

Ein zylindrischer Durchbruch im Segment 346 nimmt mittels einer Lötverbindung ein keramisches Substrat 358 auf, welches von zwei Kontaktstiften 360 und 362 durchsetzt ist, die im Substrat über eine Lötverbindung aufgenommen sind und dieses axial beidseitig überragen. Der Durchbruch im Segment 346 ist auf der Außenseite durch eine metallische Membran 364 hermetisch dicht verschlossen, wobei die Membran 364 im Grundzustand, d.h. bei nicht unzulässig erhöhtem Druck im Inneren des Schutzgehäuses 340, mit ihrer auf das Innere des Schutzgehäuses 340 weisenden Innenseite auf den Kontaktstiften 360 und 362 mit definierter Vorspannung anliegt und diese elektrisch verbindet. Ein Durchbruch 366 im Substrat 358 stellt sicher, daß in axialer Richtung zu beiden Seiten des Substrats, d.h. an der der Batterie 10 zugewandten Seite des Substrats 358 ebenso wie an der der Innenseite der Membran 364 zugewandten Seite, im wesentlichen derselbe Druck herrscht.

Während eine Kontaktlasche 372 den positiven Anschlußkontakt der Batterie 10 direkt mit dem Kontaktstift 356 der Durchführung 348 verbindet, ist der zweite Kontaktstift 354 der Durchführung 348 unter Zwischenschaltung eines Öffners mit dem negativen Anschlußkontakt der Batterie 10 kontaktiert, wobei der Öffner ein aus den Kontaktstiften 360, 362 gebildetes Kontaktpaar sowie die Membran 364 umfaßt. Dabei ist eine Kontaktlasche 368 zwischen dem negativen Anschlußkontakt der Batterie 10 und dem Kontaktstift 360 sowie eine Kontaktlasche 370 zwischen dem Kontaktstift 362 und dem Kontaktstift 354 vorgesehen.

Mittels der Membran 364 läßt sich zwar eine Volumensexpansion der Batterie 10 nicht detektieren, im Falle eines Austritts von Chemikalien aus dem Inneren des Batteriegehäuses 12, die zu einem Überschreiten eines vorbestimmten Druckgrenzwertes innerhalb des hermetisch dichten Schutzgehäuses 340 führen, wird der Membran 364, die über den Durchbruch 366 in Fluidkommunikation mit dem übrigen Innenraum des Schutzgehäuses 340 steht, eine Wölbung aufgeprägt, die ausreicht, die Membran 364 von den Kontaktstiften 360 und 362 abzuheben. Die elektrische Verbindung zwischen den beiden Kontaktstiften 360, 362, und damit zwischen dem negativen Anschlußkontakt der Batterie 10 und dem Kontaktstift 354 der Durchführung 348, ist dann reversibel unterbrochen.

Das Schutzgehäuse 340 weist ein weiteres Schaltorgan auf, welches in dem Kreissegment 342 integriert und als reversibler Schließer ausgebildet ist. Dieses Schaltorgan kann zusätzlich zu dem oder anstelle des oben beschriebenen Öffner(s) vorhanden sein. Eine Membran 380 ist zugleich Detektororgan und Teil des Schließers. Sie ist an der der Batterie 10 zugewandten Innenseite des Segments 342 vorgesehen und verschließt einen Durchbruch im Segment 342. Im zylindrischen Durchbruch ist ein keramisches Substrat 374 dergestalt eingelötet, das zwei das Substrat 374 axial durchsetzende Kontaktstifte 376 und 378 in der Grundstellung der Membran 380 in vorbestimmtem Abstand zu deren Außenseite stehen. Die Membran 380 ist zumindest in dem Bereich ihrer Außenseite elektrisch leifähig ausgebildet, der den Kontaktstiften 376, 378 benachbart ist. Vorzugsweise ist jedoch die gesamte Membran 380 elektrisch leitend, insbesondere in einem mit dem Werkstoff des metallischen Bodens und der Deckelplatte des Schutzgehäuses 340 übereinstimmendem Material, ausgeführt und im Segment 342 eingeschweißt. Sie liegt in diesem Fall als Ganzes auf dem elektrischen Potential der genannten metallischen Gehäuseteile.

Die Membran 380 muß den Durchbruch im Segment 342 nicht zwangsweise hermetisch dicht verschließen. Es ist reicht aus, wenn sie hinreichend dicht ist, bei einem unzulässig hohen Druckanstieg im Inneren des Schutzgehäuses 340 eine Wölbung zu erfahren (in Fig. 17 durch eine gestrichelte Linie angedeutet), die wenigstens ihren leitfähigen Bereich in elektrischen Kontakt mit den Kontaktstiften 376 und 378 bringt und diese elektrisch kurzschließt. Die hermetische Dichtheit muß dann von dem Substrat 374 gewährleistet werden, welches mit dem Segment 342 ebenso wie mit den Kontaktstiften 376, 378 hermetisch dicht zu verlöten wäre. Ferner wäre ein zwischen dem Substrat 374 und der Membran 380 gebildeter Kompressionsraum bei der Auslegung der Membran 380 zu berücksichtigen. Verschließt hingegen die Membran 380 den Durchbruch im Segment 342 hermetisch dicht, was bevorzugt wird, ist eine hermetisch dichte Gestaltung des Substrats 374 und der entsprechenden Lötverbindungen zwischen dem Substrat 374 und den Kontaktstiften 376, 378 sowie dem Segment 342 nicht zwingend notwendig, jedoch unter Umständen sinnvoll.

Es versteht sich, daß das Schutzgehäuse 340 so ausgelegt werden kann, daß auch eine Volumensexpansion der Batterie 10 in Wölbungsrichtung der Membran 380, d.h. im wesentlichen senkrecht zur kleinsten Ausdehnung der Batterie 10, die Membran 380 betätigt. Bevorzugte Materialien für die Kontaktstifte 360, 362, 376, 378 und die Substrate 358 und 374 des Öffners bzw. des Schließers entsprechen denjenigen der entsprechende Komponenten der Durchführung 348.

Der die Membran 380 und ein von den Kontaktstiften 376, 378 gebildetes Kontaktpaar umfassende Schließer des Schutzgehäuses 340 kann beispielsweise entsprechend dem Schließer 44 (siehe Fig. 1) eingesetzt werden, um den Nachladestromkreis 22 direkt kurzzuschließen. Es ist ebenso möglich, den Schließer mittels der Auswerteelektronik 52 zu überwachen, die ihrerseits andere Schaltorgane oder die bereits erwähnte Warneinrichtung betätigt.

Ein wesentlicher Vorteil des Schutzgehäuses 340 ist darin zu sehen, daß dieses durch Integration aller Detektor- und Schaltorgane sowie der Durchführung in der Seitenwand des Schutzgehäuses 340 sehr flach baut und in Richtung der kleinsten Ausdehnung der Batterie 10 im wesentlichen nur um die Wandstärken des Bodens und der Deckelplatte dicker als die Batterie 10 ist.

## Patentansprüche

1. Schutzvorrichtung für eine mehrfach nachladbare elektrochemische Batterie (10) mit einem Batteriegehäuse (12), wobei die Schutzvorrichtung mindestens ein Schaltorgan (44, 46, 48, 50, 86, 134, 170, 180, 204, 234, 274, 278, 360, 362, 376, 378) aufweist, welches ausgelegt oder einstellbar ist, bei einem vorbestimmten unzulässigen Betriebszustand der Batterie (10) ein Nachladen und/oder Entladen derselben zu verhindern, und das von einem Detektororgan (20, 62, 138, 166, 176, 196, 230, 304, 364, 380) betätigbar ist, das derart angeordnet ist, dass es den vorbestimmten unzulässigen Betriebszustand der Batterie (10) erfasst **dadurch gekennzeichnet, dass** die Schutzvorrichtung ein hermetisch dichtes Schutzgehäuse (14, 54, 116, 154, 190, 224, 252, 264, 298, 340) umfasst, welches
- das Batteriegehäuse (12) aufnimmt,
- dem Detektororgan (20, 62, 138, 166, 176, 196, 230, 304, 364, 380) bei unzulässigem Betriebszustand der Batterie (10) eine ein Betätigen des Schaltorgans (44, 46, 48, 50, 86, 134, 170, 180, 204, 234, 274, 278, 360, 362, 376,378) bewirkende Formänderung aufgeprägt, und
- Teil einer implantierbaren Vorrichtung ist.

2. Schutzvorrichtung nach Anspruch 1, **dadurch gekennzeichnet, daß** mindestens ein Schaltorgan als Öffner (48, 170, 180, 204, 234, 274, 360, 362) ausgebildet ist, der ausgelegt oder einstellbar ist, bei einem unzulässigen Betriebszustand der Batterie (10) einen Nachladestromkreis (22) elektrisch zu unterbrechen, welcher mittels einer Ladevorrichtung speisbar ist.

3. Schutzvorrichtung nach Anspruch 1 oder 2, **dadurch gekennzeichnet, daß** mindestens ein Schaltorgan als Öffner (50, 170, 180, 204, 234, 274, 360, 362) ausgebildet ist, der ausgelegt oder einstellbar ist, bei einem unzulässigen Betriebszustand der Batterie (10) einen mit der Batterie (10) elektrisch verbundenen Verbraucherstromkreis (24) elektrisch zu unterbrechen.

4. Schutzvorrichtung nach einem der Ansprüche 1 bis 3, **dadurch gekennzeichnet, daß** mindestens ein Schaltorgan als Schließer (44, 86, 376, 378) ausgebildet ist, der ausgelegt oder einstellbar ist, bei einem unzulässigen Betriebszustand der Batterie (10) einen Nachladestromkreis (22) elektrisch kurzzuschließen, welcher mittels einer Ladevorrichtung speisbar ist.

5. Schutzvorrichtung nach einem der vorhergehenden Ansprüche, **dadurch gekennzeichnet, daß** mindestens ein Schaltorgan als Schließer (46, 134, 278) ausgebildet ist, der ausgelegt oder einstellbar ist, bei einem unzulässigen Betriebszustand der Batterie (10) diese elektrisch kurzzuschließen.

6. Schutzvorrichtung nach einem der vorhergehenden Ansprüche, **dadurch gekennzeichnet, daß** mindestens ein Schaltorgan (170, 204, 234, 274) ausgelegt oder einstellbar ist, einen Stromkreis (22, 24) irreversibel zu unterbrechen.

7. Schutzvorrichtung nach einem der vorhergehenden Ansprüche, **dadurch gekennzeichnet, daß** mindestens ein Schaltorgan (86, 180, 360, 362, 376, 378) ausgelegt oder einstellbar ist, einen Stromkreis (22, 24) reversibel zu unterbrechen.

8. Schutzvorrichtung nach einem der vorhergehenden Ansprüche, **dadurch gekennzeichnet, daß** mindestens eine Überstromsicherung (42) vorgesehen ist, die ausgelegt oder einstellbar ist, einen Strom in einem Nachlade- (22) und/oder einem Verbraucherstromkreis (24) der Batterie (10) zu begrenzen.

9. Schutzvorrichtung nach einem der vorhergehenden Ansprüche, **dadurch gekennzeichnet, daß** mindestens eine Überstromsicherung (42, 68, 146) vorgesehen ist, die ausgelegt oder einstellbar ist, einen Strom in einem Nachlade- (22) und/oder einem Verbraucherstromkreis (24) der Batterie (10) reversibel oder irreversibel zu unterbrechen.

10. Schutzvorrichtung nach einem der vorhergehenden Ansprüche, **dadurch gekennzeichnet, daß** mindestens ein Schaltorgan (44, 46, 48, 50, 86, 134, 170, 180, 204, 234, 274, 278, 360, 362, 376, 378) mittels der Formänderung des Detektororgans (20, 62, 138, 166, 176, 196, 230, 304, 364, 380) mechanisch betätigbar ist.

11. Schutzvorrichtung nach einem der vorhergehenden Ansprüche, **dadurch gekennzeichnet, daß** mindestens ein Schaltorgan (44, 46, 48, 50) mittels einer die Formänderung des Detektororgans (20, 62, 138, 166, 176, 196, 230) erfassenden Auswerteelektronik (52) betätigbar ist.

12. Schutzvorrichtung nach Anspruch 11, **gekennzeichnet durch** einen elektrischen Dehnungsmesser (292), der die Formänderung des Detektororgans (62) erfaßt.

13. Schutzvorrichtung nach Anspruch 12, **dadurch gekennzeichnet, daß** der elektrische Dehnungsmesser als Dehnungsmeßstreifen (292) ausgebildet ist.

14. Schutzvorrichtung nach Anspruch 12, **dadurch gekennzeichnet, daß** der elektrische Dehnungsmesser als piezoelektrischer Wandler ausgelegt ist.

15. Schutzvorrichtung nach einem der vorhergehenden Ansprüche, **dadurch gekennzeichnet, daß** das Detektororgan (62, 138, 166, 176, 196, 230, 304, 364, 380) Teil des Schutzgehäuses (54, 116, 154, 190, 224, 252, 264, 298, 340) ist.

16. Schutzvorrichtung nach einem der vorhergehenden Ansprüche, **dadurch gekennzeichnet, daß** das Detektororgan (62, 138, 166, 176, 196, 230, 298, 364, 380) als wölbbare Membran ausgebildet ist.

17. Schutzvorrichtung nach Anspruch 15, **dadurch gekennzeichnet, daß** die Membran eine Außen- oder Trennwand des hermetisch dichten Schutzgehäuses (54, 116, 154, 190, 224, 252, 264, 298, 340) bildet.

18. Schutzvorrichtung nach Anspruch 16, **gekennzeichnet durch** mindestens eine Membran (364, 380), die in eine Seitenwand (342, 346) des hermetisch dichten Schutzgehäuses (340) integriert ist, wobei die Wölbungsrichtung der Membran (364, 380) im wesentlichen lotrecht zur kleinsten Ausdehnung der Batterie (10) verläuft.

19. Schutzvorrichtung nach Anspruch 18, **dadurch gekennzeichnet, daß** mindestens eine Membran (380) als Teil eines Schließers ausgebildet und mittels der Membran (380) bei einem unzulässigen Betriebszustand der Batterie (10) ein Kontaktpaar (376, 378) des Schließers elektrisch kurzschließbar ist.

20. Schutzvorrichtung nach Anspruch 18, **dadurch gekennzeichnet, daß** mindestens eine Membran (364) als Teil eines Öffners ausgebildet und mittels der Membran (364) bei einem unzulässigen Betriebszustand der Batterie (10) ein Kontaktpaar (360, 362) des Öffners elektrisch außer Eingriff bringbar ist.

21. Schutzvorrichtung nach einem der vorhergehenden Ansprüche, **dadurch gekennzeichnet, daß** die Batterie (10) mit beiden Anschlußkontakten des Batteriegehäuses (12) mit elektrisch gegeneinander isolierten Bereichen (56, 58; 118, 120; 226, 228) des Schutzgehäuses (54; 116; 224) kontaktiert ist, wobei die elektrisch gegeneinander isolierten Bereiche des Schutzgehäuses elektrisch leitfähig und mit einem Nachlade- (22) und/oder Verbraucherstromkreis (24) elektrisch verbunden sind.

22. Schutzvorrichtung nach einem der Ansprüche 1 bis 20, **dadurch gekennzeichnet, daß** wenigstens ein Anschlußkontakt des Batteriegehäuses (12) über eine hermetisch dichte mit Bezug zum Schutzgehäuse (190, 252, 298, 340) elektrisch isolierte Durchführung (214, 260, 315, 348) mit einem Nachlade- (22) und/oder Verbraucherstromkreis (24) elektrisch verbunden ist.

23. Schutzvorrichtung nach Anspruch 22, **dadurch gekennzeichnet, daß** die Durchführung (214, 260, 315, 348) mindestens einpolig ausgeführt ist und ein keramisches Substrat (318, 350) umfaßt, wobei für jeden durchzuführenden Pol ein metallischer Kontaktstift (322, 324, 354, 356) das Substrat (318, 350) hermetisch dicht durchsetzt.

24. Schutzvorrichtung nach Anspruch 23, **dadurch gekennzeichnet, daß** die Kontaktstifte (354, 356) in dem keramischen Substrat (350) und dieses in einer Außenwand (344) des Schutzgehäuses (340) hermetisch dicht mittels einer stoffschlüssigen Verbindung aufgenommen sind.

25. Schutzvorrichtung nach Anspruch 23, **dadurch gekennzeichnet, daß** die Kontaktstifte (322, 324) in dem keramischen Substrat (318) und dieses in einer metallischen Aufnahme (316) hermetisch dicht mittels einer stoffschlüssigen Verbindung aufgenommen sind, wobei die metallische Aufnahme (316) mit einer Außenwand (300) des Schutzgehäuses (298) ebenfalls stoffschlüssig verbunden ist.

26. Schutzvorrichtung nach einem der vorhergehenden Ansprüche, **dadurch gekennzeichnet, daß** der unzulässige Betriebszustand der Batterie (10) eine Volumenexpansion der Batterie (10) und/oder einen zu einem Druckanstieg im Inneren des hermetisch dichten Schutzgehäuses (14, 54, 116, 154, 190, 224, 252,264, 298, 340) führenden Gasaustritt aus dem Batteriegehäuse (12) umfaßt.

27. Schutzvorrichtung nach einem der vorhergehenden Ansprüche, **dadurch gekennzeichnet, daß** das Schutzgehäuse biokompatibel ausgestaltet ist.

## Claims

1. Protective device for a repeatedly rechargeable electrochemical battery (10) with a battery housing (12), the protective device having at least one switching element (44, 46, 48, 50, 86, 134, 170, 180, 204, 234, 274, 278, 360, 362, 376, 378) which is designed or adjustable to prevent recharging and/or discharging of the battery (10) in a predetermined impermissible operating state thereof, and which can be activated by a detector element (20, 62, 138, 166, 176, 196, 230, 304, 364, 380) which is arranged so as to detect the predetermined impermissible operating state of the battery (10), **characterised in that** the protective device has a hermetically sealed protective housing (14, 54, 116, 154, 190, 224, 252, 264, 298, 340) which
- holds the battery housing (12),
- impresses a change in shape on the detector element (20, 62, 138, 166, 176, 196, 230, 304, 364, 380) in an impermissible operating state of the battery (10), which change in shape activates the switching element (44, 46, 48, 50, 86, 134, 170, 180, 204, 234, 274, 278, 360, 362, 376, 378), and
- is part of an implantable device.

2. Protective device as claimed in claim 1, **characterised in that** at least one switching element is designed as a break contact (48, 170, 180, 204, 234, 274, 360, 362) which is designed or adjustable to electrically interrupt, in an impermissible operating state of the battery (10), a recharging circuit (22) which can be supplied by a charging device.

3. Protective device as claimed in claim 1 or 2, **characterised in that** at least one switching element is made as a break contact (50, 170, 180, 204, 234, 274, 278, 360, 362) which is designed or adjustable to electrically interrupt, in an impermissible operating state of the battery (10), a consumer circuit (24) which is electrically connected to the battery (10).

4. Protective device as claimed in one of claims 1 to 3, **characterised in that** at least one switching element is made as a make contact (44, 86, 376, 378) which is designed or adjustable to electrically short circuit, in an impermissible operating state of the battery (10), a recharging circuit (22) which can be supplied by a charging device.

5. Protective device as claimed in any one of the preceding claims, **characterised in that** at least one switching element is made as a make contact (46, 134, 278) which is designed or adjustable to electrically short circuit the battery (10) in an impermissible operating state thereof.

6. Protective device as claimed in any one of the preceding claims, **characterised in that** at least one switching element (170, 204, 234, 274) is designed or adjustable to irreversibly interrupt a circuit (22, 24).

7. Protective device as claimed in any one of the preceding claims, **characterised in that** at least one switching element (86, 180, 360, 362, 376, 378) is designed or adjustable to reversibly interrupt a circuit (22, 24).

8. Protective device as claimed in any one of the preceding claims, **characterised in that** there is provided at least one overcurrent fuse (42) which is designed or adjustable to limit a current in a recharging circuit (22) and/or consumer circuit (24) of the battery (10).

9. Protective device as claimed in any one of the preceding claims, **characterised in that** there is provided at least one overcurrent fuse (42, 68, 146) which is designed or adjustable to reversibly or irreversibly interrupt a current in a recharging circuit (22) and/or consumer circuit (24) of the battery (10).

10. Protective device as claimed in any one of the preceding claims, **characterised in that** at least one switching element (44, 46, 48, 50, 86, 134, 170, 180, 204, 234, 274, 278, 360, 362, 376, 378) can be mechanically actuated by means of the change in shape of the detector element (20, 62, 138, 166, 176, 196, 230, 304, 364, 380).

11. Protective device as claimed in any one of the preceding claims, **characterised in that** at least one switching element (44, 46, 48, 50) can be mechanically actuated by means of evaluation electronics (52) which acquire the change in shape of the detector element (20, 62, 138, 166, 176, 196, 230).

12. Protective device as claimed in claim 11, **characterised by** an electrical extensometer (292) which acquires the change in shape of the detector element (62).

13. Protective device as claimed in claim 12, **characterised in that** the electrical extensometer is made as a strain gauge (292).

14. Protective device as claimed in claim 12, **characterised in that** the electrical extensometer is made as a piezoelectric converter.

15. Protective device as claimed in any one of the preceding claims, **characterised in that** the detector element (62, 138, 166, 176, 196, 230, 304, 364, 380) is part of the protective housing (54, 116, 154, 190, 224, 252, 264, 298, 340).

16. Protective device as claimed in any one of the preceding claims, **characterised in that** the detector element (62, 138, 166, 176, 196, 230, 298, 364, 380) is made as a deflectable membrane.

17. Protective device as claimed in claim 15, **characterised in that** the membrane forms an outer wall or partition of the hermetically sealed protective housing (54, 116, 154, 190, 224, 252, 264, 298, 340).

18. Protective device as claimed in claim 16, **characterised by** at least one membrane (364, 380) which is integrated into a side wall (342, 346) of the hermetically sealed protective housing (340), the direction of deflection of the membrane (364, 380) extending essentially perpendicular to the smallest extension of the battery (10).

19. Protective device as claimed in claim 18, **characterised in that** at least one membrane (380) is made as part of a make contact and that a contact pair (376, 378) of the make contact can be electrically short circuited by means of the membrane (380) in an impermissible operating state of the battery (10).

20. Protective device as claimed in claim 18, **characterised in that** at least one membrane (364) is made as part of a break contact and that a contact pair (360, 362) of the break contact can be electrically disengaged by the membrane (364) in an impermissible operating state of the battery (10).

21. Protective device as claimed in any one of the preceding claims, **characterised in that** the battery (10) with both terminal contacts of the battery housing (12) makes contact with areas (56, 58; 118, 120; 226, 228) of the protective housing (54; 116; 224) which areas are electrically insulated against one another, the areas of the protective housing which are electrically insulated against one another being electrically conductive and being electrically connected to a recharging circuit (22) and/or consumer circuit (24).

22. Protective device as claimed in any one of claims 1 to 20, **characterised in that** at least one terminal contact of the battery housing (12) is electrically connected to a recharging circuit (22) and/or consumer circuit (24) via a hermetically sealed feed-through (214, 260, 315, 348) which is electrically insulated with reference to the protective housing (190, 252, 298, 340).

23. Protective device as claimed in claim 22, **characterised in that** the feed-through (214, 260, 315, 348) is made at least single-pole and comprises a ceramic substrate (318, 350), and wherein, for each pole to be fed through, a metallic contact pin (322, 324, 354, 356) is provided which penetrates the substrate (318, 350) in a hermetically sealed manner.

24. Protective device as claimed in claim 23, **characterised in that** the contact pins (354, 356) are held in the ceramic substrate (350) in a hermetically sealed manner by means of a material connection, and the ceramic substrate is held in an outside wall (344) of the protective housing (340) in a hermetically sealed manner by means of a material connection.

25. Protective device as claimed in claim 23, **characterised in that** the contact pins (322, 324) are held in the ceramic substrate (318) in a hermetically sealed manner by means of a material connection, and the ceramic substrate is held in a metallic receiver (316) in a hermetically sealed manner by means of a material connection, the metallic receiver (316) being connected to an outside wall (300) of the protective housing (298) likewise by a material connection.

26. Protective device as claimed in any one of the preceding claims, **characterised in that** the impermissible operating state of the battery (10) comprises an expansion in the volume of the battery (10) and/or an escape of gas from the battery housing (12) which results in a pressure rise within the hermetically sealed protective housing (14, 54, 116, 154, 190, 224, 252, 264, 298, 340).

27. Protective device as claimed in any one of the preceding claims, **characterised in that** the protective housing is made biocompatible.

## Revendications

1. Dispositif de protection pour une batterie (10) électrochimique plusieurs fois rechargeable comportant un carter de batterie (12), le dispositif de protection présentant au moins un organe de commutation (44, 46, 48, 50, 86, 134, 170, 180, 204, 234, 274, 278, 360, 362, 376, 378), qui est conçu ou réglable pour empêcher un rechargement et/ou un déchargement de la batterie (10) si celle-ci est dans un état de service non autorisé et prédéfini, et qui peut être actionné par un organe détecteur (20, 62, 138, 166, 176, 196, 230, 304, 364, 380), lequel est disposé de telle sorte qu'il enregistre l'état de service non autorisé et prédéfini de la batterie (10), **caractérisé en ce que** le dispositif de protection comprend un carter de protection (14, 54, 116, 154, 190, 224, 252, 264, 298, 340) hermétiquement étanche qui
- reçoit le carter de batterie (12),
- imprime à l'organe détecteur (20, 62, 138, 166, 176, 196, 230, 304, 364, 380), lorsque la batterie (10) est dans un état de service non autorisé, une déformation entraînant un actionnement de l'organe de commutation (44, 46, 48, 50, 86, 134, 170, 180, 204, 234, 274, 278, 360, 362, 376, 378), et
- fait partie d'un dispositif pouvant être mis en oeuvre.

2. Dispositif de protection selon la revendication 1, **caractérisé en ce qu'**au moins un organe de commutation est conçu comme contact à ouverture (48, 170, 180, 204, 234, 274, 360, 362), qui est établi ou réglable pour interrompre électriquement un circuit de recharge (22) si la batterie (10) présente un état de service non autorisé, lequel circuit peut être alimenté au moyen d'un dispositif de chargement.

3. Dispositif de protection selon la revendication 1 ou 2, **caractérisé en ce qu'**au moins un organe de commutation est conçu comme contact à ouverture (50, 170, 180, 204, 234, 274, 360, 362) qui est établi ou réglable pour interrompre électriquement un circuit utilisateur (24) relié électriquement à la batterie (10) si celle-ci présente un état de service non autorisé.

4. Dispositif de protection selon l'une quelconque des revendications 1 à 3, **caractérisé en ce qu'**au moins un organe de commutation est conçu comme contact à fermeture (44, 86, 376, 378) qui est établi ou réglable de façon à court-circuiter électriquement un circuit de recharge (22) si la batterie (10) présente un état de service non autorisé, lequel circuit peut être alimenté au moyen d'un dispositif de chargement.

5. Dispositif de protection selon l'une quelconque des revendications précédentes, **caractérisé en ce qu'**au moins un organe de commutation est conçu comme contact à fermeture (46, 134, 278), qui est établi ou réglable pour court-circuiter électriquement la batterie (10) si celle-ci présente un état de service non autorisé.

6. Dispositif de protection selon l'une quelconque des revendications précédentes, **caractérisé en ce qu'**au moins un organe de commutation (170, 204, 234, 274) est conçu ou réglable pour interrompre un circuit (22, 24) de façon irréversible.

7. Dispositif de protection selon l'une quelconque des revendications précédentes, **caractérisé en ce qu'**au moins un organe de commutation (86, 180, 360, 362, 376, 378) est conçu ou réglable pour interrompre un circuit (22, 24) de façon réversible.

8. Dispositif de protection selon l'une quelconque des revendications précédentes, **caractérisé en ce qu'**il est prévu au moins un fusible de sûreté (42) qui est conçu ou réglable pour limiter un courant dans un circuit de rechargement (22) et/ou un circuit utilisateur (24) de la batterie (10).

9. Dispositif de protection selon l'une quelconque des revendications précédentes, **caractérisé en ce qu'**il est prévu au moins un fusible de sécurité (42, 68, 146) qui est établi ou réglable pour interrompre de façon réversible ou irréversible un courant dans un circuit de recharge (22) et/ou un circuit utilisateur (24) de la batterie (10).

10. Dispositif de protection selon l'une quelconque des revendications précédentes, **caractérisé en ce qu'**au moins un organe de commutation (44, 46, 48, 50, 86, 134, 170, 180, 204, 234, 274, 278, 360, 362, 376, 378) peut être actionné mécaniquement au moyen de la déformation de l'organe détecteur (20, 62, 138, 166, 176, 196, 230, 304, 364, 380).

11. Dispositif de protection selon l'une quelconque des revendications précédentes, **caractérisé en ce qu'**au moins un organe de commutation (44, 46, 48, 50) peut être actionné au moyen d'une électronique d'analyse (52) enregistrant la déformation de l'organe détecteur (20, 62, 138, 166, 176, 196, 230).

12. Dispositif de protection selon la revendication 11, **caractérisé en ce qu'**un extensomètre électrique (292) détecte la déformation de l'organe détecteur (62).

13. Dispositif de protection selon la revendication 12, **caractérisé en ce que** l'extensomètre électrique est conçu comme une jauge de contrainte (292).

14. Dispositif de protection selon la revendication 12, **caractérisé en ce que** l'extensomètre électrique est conçu comme un convertisseur piézoélectrique.

15. Dispositif de protection selon l'une quelconque des revendications précédentes, **caractérisé en ce que** l'organe détecteur (62, 138, 166, 176, 196, 230, 304, 364, 380) fait partie du carter de protection (54, 116, 154, 190, 224, 252, 264, 298, 340).

16. Dispositif de protection selon l'une quelconque des revendications précédentes, **caractérisé en ce que** l'organe détecteur (62, 138, 166, 176, 196, 230, 298, 364, 380) est conçu comme une membrane pouvant être courbée.

17. Dispositif de protection selon la revendication 15, **caractérisé en ce que** la membrane forme une paroi extérieure ou une paroi de séparation du carter de protection (54, 116, 154, 190, 224, 252, 264, 298, 340) hermétiquement étanche.

18. Dispositif de protection selon la revendication 16, **caractérisé par** au moins une membrane (364, 380) qui est intégrée dans une paroi latérale (342, 346) du carter de protection (340) hermétiquement étanche, le sens de courbure de la membrane (364, 380) étant sensiblement perpendiculaire à la plus petite extension de la batterie (10).

19. Dispositif de protection selon la revendication 18, **caractérisé en ce qu'**au moins une membrane (380) est conçue comme une partie d'un contact à fermeture et une paire de contacts (376, 378) du contact à fermeture peut être court-circuitée électriquement au moyen de la membrane (380) si la batterie (10) présente un état de service non autorisé.

20. Dispositif de protection selon la revendication 18, **caractérisé en ce qu'**au moins une membrane (364) est conçue comme une partie d'un contact à ouverture et une paire de contacts (360, 362) du contact à ouverture peut être désengagée électriquement au moyen de la membrane (364) si la batterie (10) présente un état de service non autorisé.

21. Dispositif de protection selon l'une quelconque des revendications précédentes, **caractérisé en ce que** la batterie (10) est mise en contact avec les deux contacts de raccordement du carter de batterie (12) avec des zones (56, 58 ; 118, 120 ; 226,228), isolées électriquement les unes des autres, du carter de protection (54, 116, 224), les zones isolées électriquement les unes des autres du carter de protection étant électriquement conductibles et électriquement reliées à un circuit de recharge (22) et/ou un circuit utilisateur (24).

22. Dispositif de protection selon l'une quelconque des revendications 1 à 20, **caractérisé en ce qu'**au moins un contact de raccordement du carter de batterie (12) est relié électriquement à un circuit de recharge (22) et/ou un circuit utilisateur (24) au moyen d'une traversée (214, 260, 315, 348) hermétiquement étanche par rapport au carter de protection (190, 252, 298, 340) et isolée électriquement.

23. Dispositif de protection selon la revendication 22, **caractérisé en ce que** ce que la traversée (214, 260, 315, 348) est réalisée avec au moins un pôle et comprend un substrat (318, 350) céramique, une broche de contact (322, 324, 354, 356) métallique traversant le substrat (318, 350) de façon hermétiquement étanche pour chaque pôle à traverser.

24. Dispositif de protection selon la revendication 23, **caractérisé en ce que** les broches de contact (354, 356) sont réceptionnées de façon hermétiquement étanche au moyen d'une liaison par enrobage dans le substrat (350) céramique et ce dans une paroi extérieure (344) du carter de protection (340).

25. Dispositif de protection selon la revendication 23, **caractérisé en ce que** les broches de contact (322, 324) sont réceptionnées de façon hermétiquement étanche au moyen d'une liaison par enrobage dans le substrat (318) céramique et ce dans un logement (316) métallique, le logement (316) métallique étant relié également par enrobage à une paroi extérieure (300) du carter de protection (298).

26. Dispositif de protection selon l'une quelconque des revendications précédentes, **caractérisé en ce que** l'état de service non autorisé de la batterie (10) comprend une expansion de volume de la batterie (10) et/ou une sortie de gaz du carter de batterie (12) qui entraîne une augmentation de pression à l'intérieur du carter de protection (14, 54, 116, 154, 190, 224, 252, 264, 298, 340) hermétiquement étanche.

27. Dispositif de protection selon l'une quelconque des revendications précédentes, **caractérisé en ce que** le carter de protection est conçu de façon biocompatible.
